(19) Europäisches Patentamt
European Patent Office
Office européen des brevets

(11) EP 4 811 838 A1

(12) **EUROPEAN PATENT APPLICATION**
published in accordance with Art. 153(4) EPC

(43) Date of publication:
**23.09.2026 Bulletin 2026/39**

(21) Application number: **25742239.4**

(22) Date of filing: **15.01.2025**

(51) International Patent Classification (IPC):
***H04W 8/24*** *(2009.01)* ***H04W 8/18*** *(2009.01)*
***H04W 24/08*** *(2009.01)* ***H04W 76/22*** *(2018.01)*
***H04W 88/06*** *(2009.01)*

(52) Cooperative Patent Classification (CPC):
**H04W 8/18; H04W 8/24; H04W 24/08; H04W 76/22; H04W 88/06**

(86) International application number:
**PCT/KR2025/000914**

(87) International publication number:
**WO 2025/155100 (24.07.2025 Gazette 2025/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2024 KR 20240007870**

(71) Applicant: **Samsung Electronics Co., Ltd.**
**Suwon-si, Gyeonggi-do 16677 (KR)**

(72) Inventor: **JUNG, Sangyeob**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) METHOD BY WHICH BASE STATION SIMULTANEOUSLY CONFIGURES PLURALITY OF GAPS TO TERMINAL IN NEXT GENERATION MOBILE COMMUNICATION SYSTEM, AND DEVICE

(57) The present disclosure relates to a 5G or 6G communication system for supporting higher data transmission rates. Presented in the present disclosure are a method by which a base station simultaneously configures a plurality of gaps to a terminal in a mobile communication system, and a device.

FIG. 1F

1f-05
UE
1f-10
Base station
1f-15
RRC connected mode
UE capability information
(jointConcurrentMG-MUSIM-Gap,
musim-GapPriorityPreference)
1f-20
Joint configuration of MUSIM gap
and concurrent measurement gap
1f-25



Processed by Luminess, 75001 PARIS (FR)

## Description

[Technical Field]

The disclosure relates to operations of a terminal and a base station and, more specifically, to a method and a device for jointly configuring multiple gaps for a terminal by a base station in a mobile communication system.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation

capability by utilizing ultra-high-performance communication and computing resources.

[Disclosure of Invention]

[Technical Problem]

An aspect of the disclosure is to provide a method and a device for jointly configuring multiple gaps for a terminal by a base station in a mobile communication system.

The technical subjects pursued in the disclosure may not be limited to the above-mentioned technical subjects, and other technical subjects which are not mentioned herein may be clearly understood from the following description by those skilled in the art to which the disclosure pertains.

[Solution to Problem]

In order to solve the above problems, a method performed by a terminal in a wireless communication system according to an embodiment of the disclosure may include transmitting, to a base station, a first message including information associated with the terminal having capability to configure both a multiple universal subscriber identity module (MUSIM) gap and a concurrent measurement gap, and based on the information, receiving, from the base station, a second message including at least one of configuration information of the MUSIM gap and configuration information of the concurrent measurement gap.

According to an embodiment, a pre-configured measurement gap for positioning may not be configured together with the MUSIM gap and the concurrent measurement gap.

According to an embodiment, the information associated with the terminal having capability to configure both the MUSIM gap and the concurrent measurement gap may be associated with information indicating whether the terminal is able to provide MUSIM assistance information regarding a priority preference for a periodic MUSIM gap, is able to support a periodic MUSIM gap priority configuration related thereto, and supports a preference for keeping colliding (collided) MUSIM gaps.

According to an embodiment, the information associated with the terminal having capability to configure both the MUSIM gap and the concurrent measurement gap may be indicated by musim-GapPriorityPreference information.

According to an embodiment, the method may further include, in case that the configuration information of the MUSIM gap includes information for adding at least one periodic MUSIM gap, setting up at least one periodic MUSIM gap configuration, in case that the configuration information of the MUSIM gap includes information for adding an aperiodic MUSIM gap, setting up an aperiodic MUSIM gap configuration, and in case that information indicating that the terminal is allowed to keep all colliding MUSIM periodic and aperiodic gaps is configured according to the configuration information of the MUSIM gap, keeping all colliding MUSIM gaps.

According to an embodiment, the information associated with the terminal having capability to configure both the MUSIM gap and the concurrent measurement gap together may further indicate that the terminal prefers to keep all colliding MUSIM gaps.

In addition, in order to solve the above problems, a method performed by a base station in a wireless communication system according to an embodiment of the disclosure may include receiving, from a terminal, a first message including information associated with the terminal having capability to configure both a multiple universal subscriber identity module (MUSIM) gap and a concurrent measurement gap, and based on the information, transmitting, to the terminal, a second message including at least one of configuration information of the MUSIM gap and configuration information of the concurrent measurement gap.

According to an embodiment, the configuration information of the MUSIM gap may include information for adding at least one periodic MUSIM gap, information for adding an aperiodic MUSIM gap, and information indicating that the terminal is allowed to keep all colliding MUSIM periodic and aperiodic gaps.

According to an embodiment, according to the configuration information of the MUSIM gap, at least one periodic MUSIM gap configuration may be set up, an aperiodic MUSIM gap configuration may be set up, and all colliding MUSIM gaps may be kept.

In addition, in order to solve the above problems, a terminal in a wireless communication system according to an embodiment of the disclosure may include a transceiver, and a controller connected to the transceiver, wherein the controller is configured to transmit, to a base station, a first message including information associated with the terminal having capability to configure both a multiple universal subscriber identity module (MUSIM) gap and a concurrent measurement gap, and based on the information, receive, from the base station, a second message including at least one of configuration information of the MUSIM gap and configuration information of the concurrent measurement gap.

In addition, in order to solve the above problems, a base station in a wireless communication system according to an embodiment of the disclosure may include a transceiver, and a controller connected to the transceiver, wherein the

controller is configured to receive, from a terminal, a first message including information associated with the terminal having capability to configure both a multiple universal subscriber identity module (MUSIM) gap and a concurrent measurement gap, and based on the information, transmit, to the terminal, a second message including at least one of configuration information of the MUSIM gap and configuration information of the concurrent measurement gap.

[Advantageous Effects of Invention]

An embodiment of the disclosure can provide a method and a device for jointly configuring multiple gaps for a terminal by a base station in a mobile communication system.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

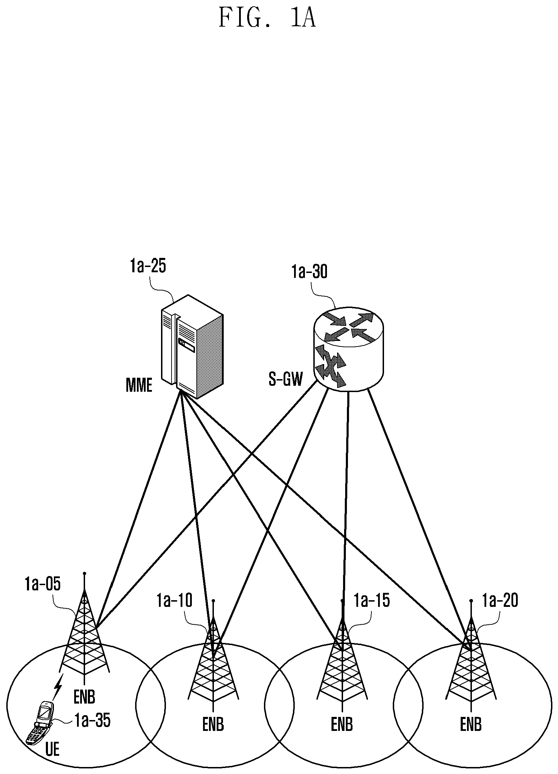

FIG. 1A illustrates a structure of an LTE system according to an embodiment of the disclosure.

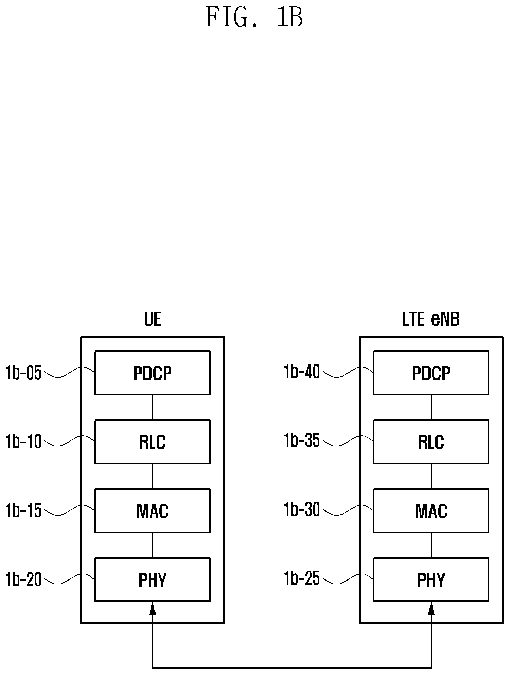

FIG. 1B illustrates a radio protocol structure in an LTE system according to an embodiment of the disclosure.

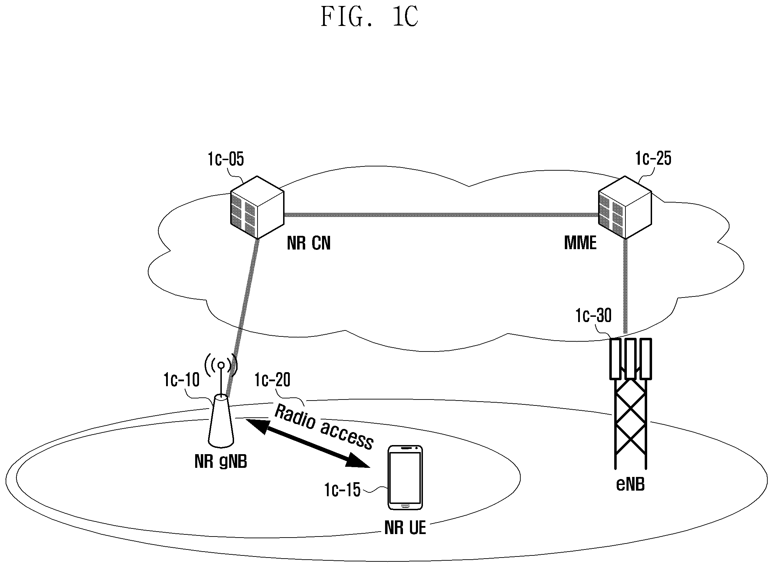

FIG. 1C illustrates a structure of a next-generation mobile communication system according to an embodiment of the disclosure.

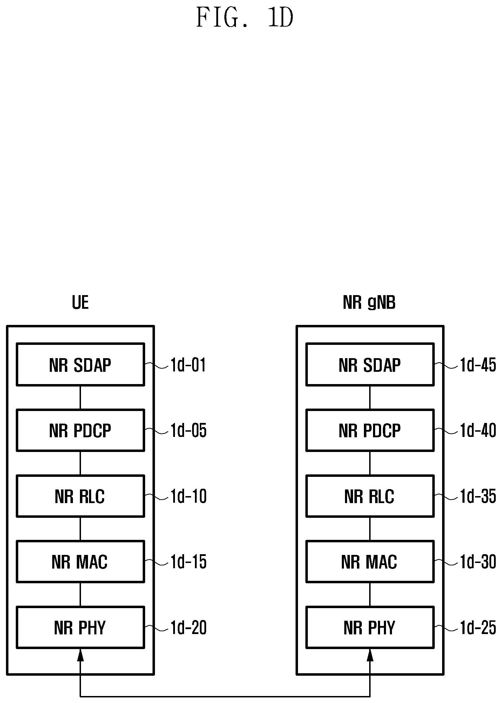

FIG. 1D illustrates a radio protocol structure of a next-generation mobile communication system according to an embodiment of the disclosure.

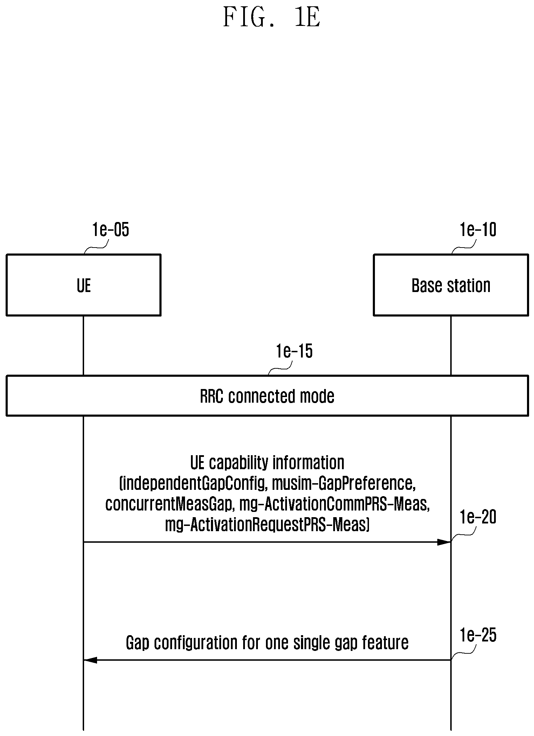

FIG. 1E is an example of a signal flow diagram for an operation in which a gap is configured by a base station for a terminal supporting one or more independent gap features according to an embodiment of the disclosure.

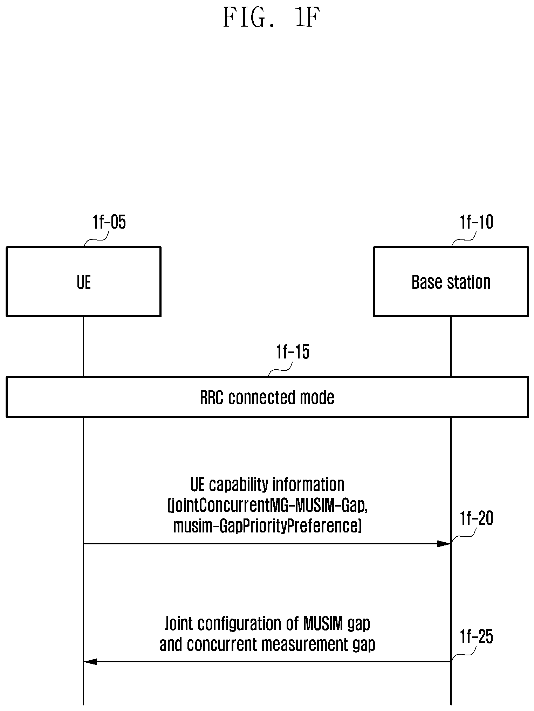

FIG. 1F is an example of a signal flow diagram for an operation in which a gap is configured by a base station for a terminal supporting one or more independent gap features according to another embodiment of the disclosure.

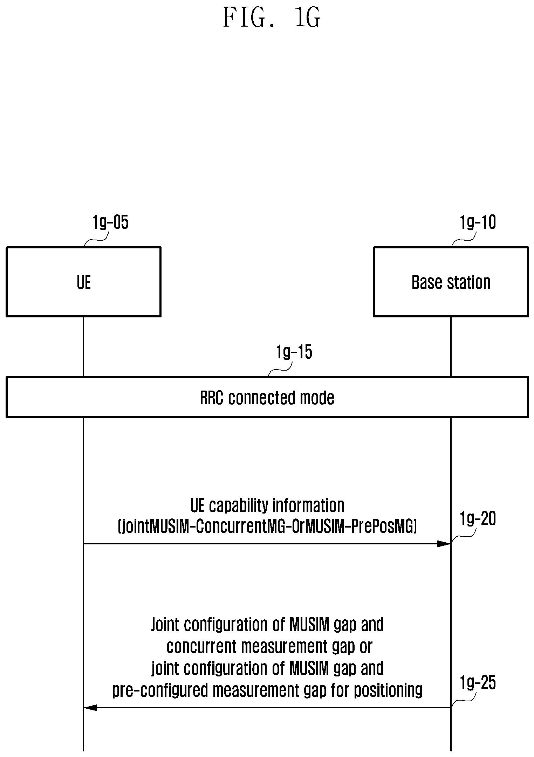

FIG. 1G is an example of a signal flow diagram for an operation in which a gap is configured by a base station for a terminal supporting one or more independent gap features according to another embodiment of the disclosure.

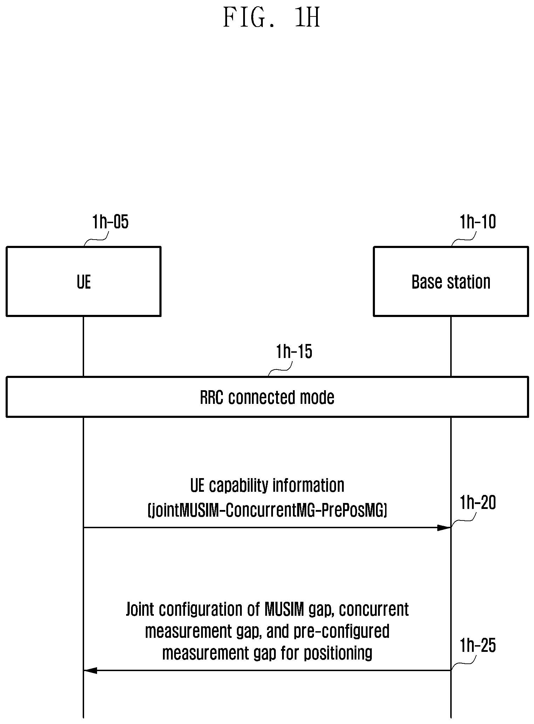

FIG. 1H is an example of a signal flow diagram for an operation in which a gap is configured by a base station for a terminal supporting one or more independent gap features according to another embodiment of the disclosure.

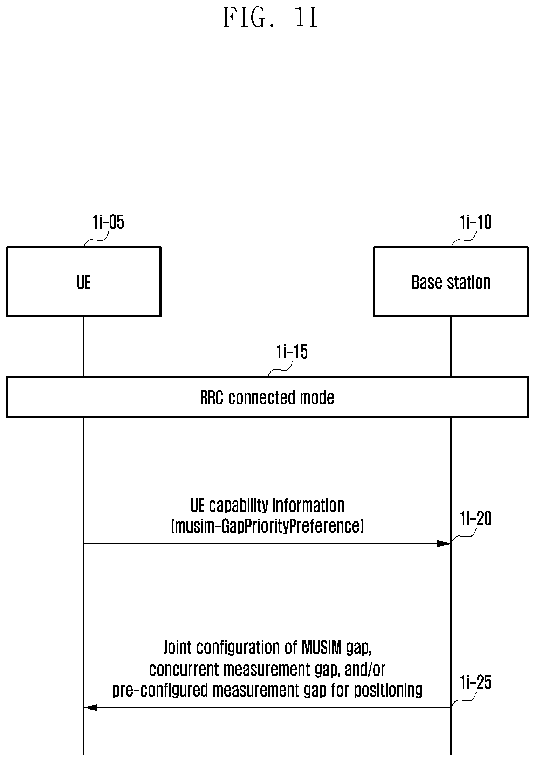

FIG. 1I is an example of a signal flow diagram for an operation in which a gap is configured by a base station for a terminal supporting one or more independent gap features according to another embodiment of the disclosure.

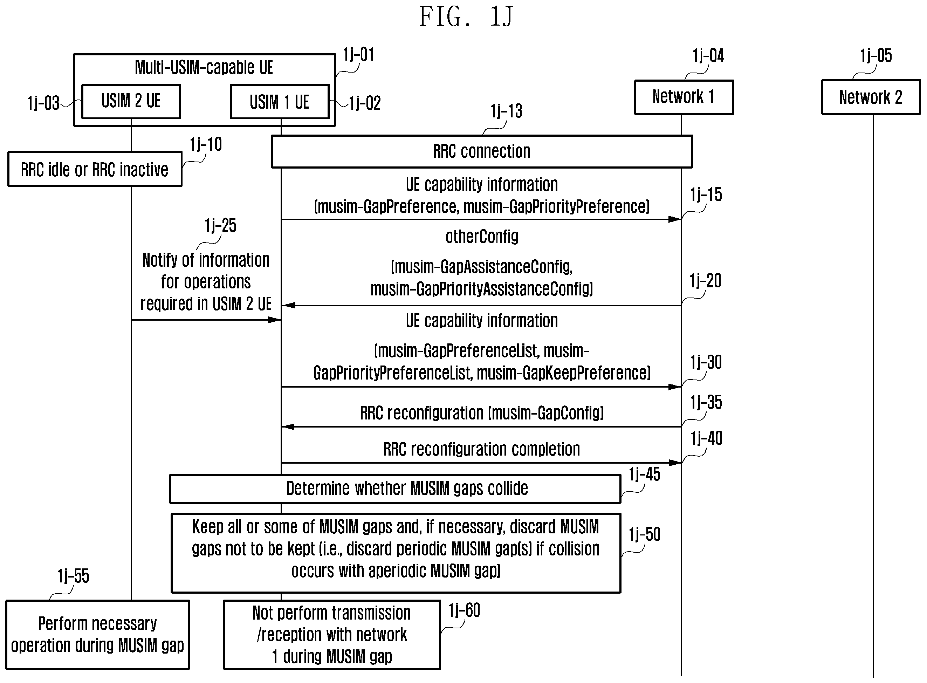

FIG. 1J is an example of a signal flow diagram illustrating processing of colliding MUSIM gaps by a terminal (multi-USIM UE, hereinafter MUSIM UE) supporting multiple universal subscriber identity modules (USIMs) according to an embodiment of the disclosure.

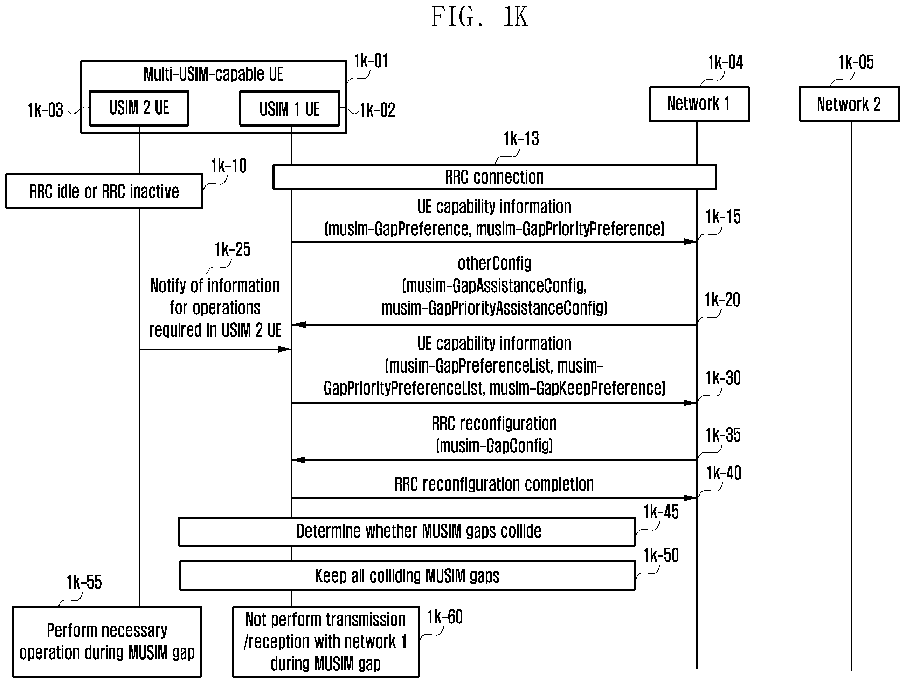

FIG. 1K is an example of a signal flow diagram illustrating processing of colliding MUSIM gaps by a terminal (MUSIM UE) supporting multiple USIMs according to another embodiment of the disclosure.

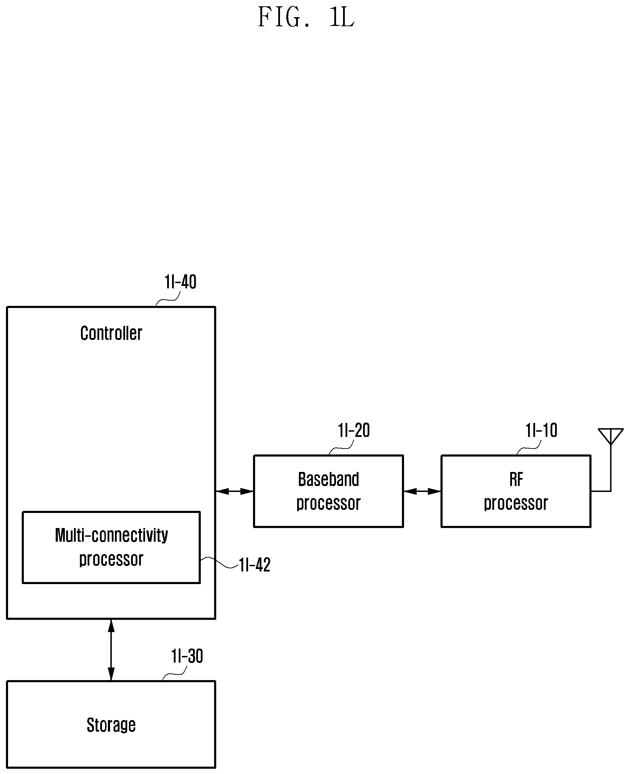

FIG. 1L is a block diagram illustrating an internal structure of a UE according to an embodiment of the disclosure.

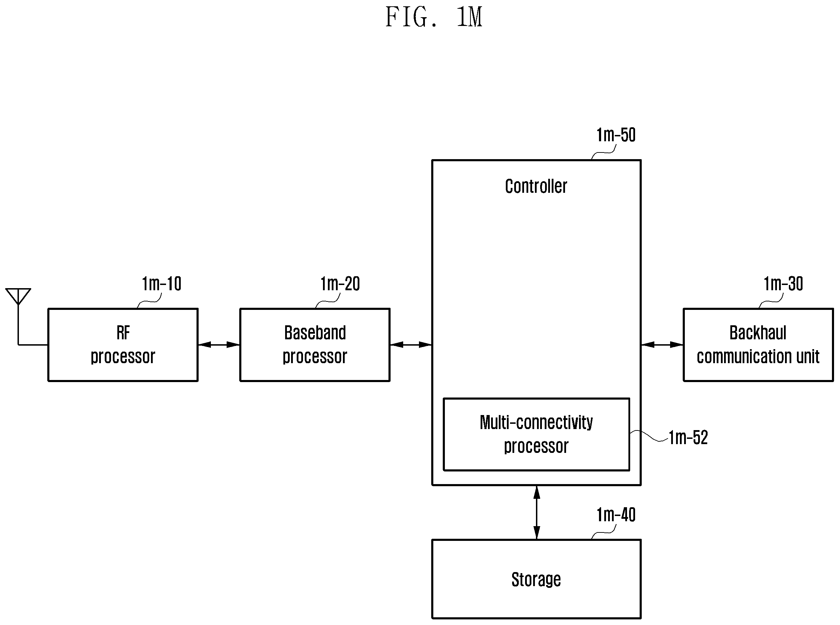

FIG. 1M is a block diagram illustrating a structure of an NR base station according to an embodiment of the disclosure.

[Mode for the Invention]

Hereinafter, the operation principle of the disclosure will be described in detail in conjunction with the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions should be made based on content throughout the specification.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

Hereinafter, the operation principle of the disclosure will be described in detail in conjunction with the accompanying drawings. The terms which will be described below are terms defined in consideration of the functions in the disclosure. These terms may be different according to users, intentions of the users, or customs, and their definitions should be made based on the contents throughout the specification.

For the same reason, in the accompanying drawings, some elements may be exaggerated, omitted, or schematically illustrated. Also, the size of each element does not completely reflect the actual size thereof.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

The specific terms as used in the following description are provided to help an understanding of the disclosure, and these specific terms may be used in different forms without departing from the technical idea of the disclosure.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

FIG. 1A illustrates a structure of an LTE system according to an embodiment of the disclosure.

Referring to FIG. 1A, as illustrated therein, a radio access network of an LTE system may include next-generation base stations (evolved node Bs, hereinafter ENBs, eNBs, Node Bs, or base stations) 1a-05, 1a-10, 1a-15, and 1a-20, a mobility management entity (MME) 1a-25, and a serving gateway (S-GW) 1a-30. A user equipment (hereinafter UE or terminal) 1a-35 may access an external network through the ENBs 1a-05 to 1a-20 and the S-GW 1a-30.

In FIG. 1A, the ENBs 1a-05 to 1a-20 each correspond to a conventional node B in a UMTS system. The ENBs 1a-05 to 1a-20 are connected to the UE 1a-35 through a radio channel, and perform more complicated roles than the conventional node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs 1a-05 to 1a-20 serve as the device. In general, one ENB 1a-05 to 1a-20 controls multiple cells. For example, in order to implement a transfer rate of 100Mbps, the LTE system uses orthogonal frequency division multiplexing (hereinafter referred to as OFDM) as a radio access technology in a bandwidth of, for example, 20MHz. Furthermore, the LTE system may employ an adaptive modulation & coding (hereinafter referred to as AMC) scheme for determining a modulation

scheme and a channel coding rate according to a channel state of a UE. The S-GW 1a-30 is a device that provides a data bearer, and generates or removes a data bearer under the control of the MME 1a-25. The MME 1a-25 is a device responsible for various control functions as well as a mobility management function for a UE 1a-35, and is connected to multiple base stations 1a-05 to 1a-20.

FIG. 1B illustrates a radio protocol structure in an LTE system according to an embodiment of the disclosure.

Referring to FIG. 1B, a radio protocol of an LTE system includes a packet data convergence protocol (PDCP) 1b-05 or 1b-40, a radio link control(RLC) 1b-10 or 1b-35, and a medium access control (MAC) 1b-15 or 1b-30 on each of UE and ENB sides.

The PDCP 1b-05 or 1b-40 serves to perform operations such as IP header compression/reconstruction. The main functions of the PDCP 1b-05 or 1b-40 may be summarized as follows.

- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (RLC) 1b-10 or 1b-35 reconfigures a PDCP protocol data unit (PDU) into appropriate sizes to perform an ARQ operation and the like. The main functions of the RLC 1b-10 or 1b-35 may be summarized as follows.

- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 1b-15 or 1b-30 is connected to several RLC layer devices configured in a single terminal, and performs operations of multiplexing RLC PDUs into an MAC PDU and demultiplexing RLC PDUs from an MAC PDU. The main functions of the MAC 1b-15 or 1b-30 are summarized as follows.

- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A physical layer 1b-20 or 1b-25 performs operations of channel-coding and modulating upper layer data, thereby obtaining OFDM symbols, and delivering the same through a radio channel, or demodulating OFDM symbols received through the radio channel, channel-decoding the same, and delivering the same to the upper layer.

FIG. 1C illustrates a structure of a next-generation mobile communication system according to an embodiment of the disclosure.

Referring to FIG. 1C, a radio access network of a next-generation mobile communication system (hereinafter NR or 5G) includes a next-generation base station (new radio node B, hereinafter NR gNB, gNB, or NR base station) 1c-10, and a new radio core network (NR CN) 1c-05. A user equipment (new radio user equipment, hereinafter NR UE or terminal)

1c-15 accesses an external network via the NR gNB 1c-10 and the NR CN 1c-05.

In FIG. 1C, the NR gNB 1c-10 corresponds to an evolved Node B (eNB) of the conventional LTE system. The NR gNB 1c-10 is connected to the NR UE 1c-15 through a radio channel and may provide outstanding services as compared to a conventional node B. In the next-generation mobile communication system, since all user traffic is serviced through a shared channel, a device that collects state information, such as buffer statuses, available transmit power states, and channel states of UEs 1c-15, and performs scheduling accordingly is required, and the NR gNB 1c-10 serves as the device. In general, one NR gNB 1c-10 controls multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system may employ an adaptive modulation & coding (hereinafter referred to as AMC) scheme for determining a modulation scheme and a channel coding rate according to a channel state of a UE 1c-15. The NR CN 1c-05 performs functions such as mobility support, bearer configuration, and QoS configuration. The NR CN 1c-05 is a device responsible for various control functions as well as a mobility management function for a UE 1c-15, and may be connected to multiple base stations 1c-10. In addition, the next-generation mobile communication system may interwork with the existing LTE system, and the NR CN 1c-05 may be connected to an MME 1c-25 via a network interface. The MME 1c-25 may be connected to an eNB 1c-30 that is an existing base station.

FIG. 1D illustrates a radio protocol structure of a next-generation mobile communication system according to an embodiment of the disclosure.

FIG. 1D illustrates a radio protocol structure of a next-generation mobile communication system to which the disclosure is applicable.

Referring to FIG. 1D, a radio protocol of a next-generation mobile communication system includes an NR SDAP 1d-01 or 1d-45, an NR PDCP 1d-05 or 1d-40, an NR RLC 1d-10 or 1d-35, and an NR MAC 1d-15 or 1d-30 on each of UE and NR gNB sides.

The main functions of the NR SDAP 1d-01 or 1d-45 may include some of functions below.

- Transfer of user plane data
- Mapping between a QoS flow and a DRB for both the UL and the DL
- Marking QoS flow ID in both DL and UL packets
- Reflective QoS flow to DRB mapping for UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating QoS. The QoS information may be used as data processing priority, scheduling information, etc. for smoothly supporting services.

The main functions of the NR PDCP 1d-05 or 1d-40 may include some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above-mentioned functions, the reordering of the NR PDCP device refers to a function of reordering PDCP PDU received from a lower layer in an order based on PDCP sequence numbers (SNs), and may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 1d-10 or 1d-35 may include some of functions below.

- Transfer of upper layer PDUs
- In-sequence delivery of upper layer PDUs
- Out-of-sequence delivery of upper layer PDUs
- ARQ function (error correction through ARQ)
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

In the above-mentioned functions, the in-sequence delivery of the NR RLC device refers to a function of transferring RLC SDUs received from a lower layer to an upper layer in sequence, and may include a function of, if one original RLC SDU is divided into several RLC SDUs and then the RLC SDUs are received, reassembling the several RLC SDUs and transferring the reassembled RLC SDUs, may include a function of rearranging received RLC PDUs with reference to RLC sequence numbers (SNs) or PDCP sequence numbers (SNs), may include a function of rearranging order to record lost RLC PDUs, may include a function of reporting the state of lost RLC PDUs to a transmission side, may include a function of requesting retransmission of lost RLC PDUs, may include a function of, if there is a lost RLC SDU, sequentially transferring only RLC SDUs before the lost RLC SDU to an upper layer, may include a function of, although there is a lost RLC SDU, if a predetermined timer has expired, sequentially transferring, to an upper layer, all the RLC SDUs received before the timer is started, or may include a function of, although there is a lost RLC SDU, if a predetermined timer has expired, sequentially transferring all the RLC SDUs received up to the current, to an upper layer. In addition, the RLC PDUs may be processed in the order in which they are received (in the order of arrival, regardless of the order of the sequence number) and then delivered to the PDCP device out of sequence (out-of-sequence delivery), and in the case of the segment, the segments stored in a buffer or segments to be received later may be received, and then reconstructed into one complete RLC PDU, processed, and delivered to the PDCP device. The NR RLC layer may include no concatenation function, which may be performed in the NR MAC layer or replaced with a multiplexing function of the NR MAC layer.

In the above-mentioned functions, the out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 1d-15 or 1d-30 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 1d-20 or 1d-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

FIG. 1E is an example of a signal flow diagram for an operation in which a gap is configured by a base station for a UE supporting one or more independent gap features according to an embodiment of the disclosure.

Referring to FIG. 1E, in operation 1e-15, a UE 1e-05 may be in an RRC connected mode (RRC connected state) by establishing an RRC connection with a base station (e.g., gNB) 1e-10.

In operation 1e-20, the UE 1e-05 may transmit a UE capability information (e.g., UECapabilityInformation) message to the base station 1e-10. The message may include at least one of the following.

- independentGapConfig

■ This indicates a UE capability indicator indicating whether two independent gap configurations for frequency range 1 (FR1) and frequency range 2 (FR2) are supported, as described in clause 9.1.2 of technical specification 38.133 (independentGapConfig indicates whether the UE supports two independent measurement gap configurations for FR1 and FR2 specified in clause 9.1.2 of TS 38.133).
■ The UE capability indicator is signaled per UE, there is no functional difference between frequency division duplexing (FDD) and time division duplexing (TDD), and there is no functional difference between FR1 and FR2.
■ The UE capability indicator may also indicate whether measurement for a different FR2 network is supported when (NG)EN-DC is not configured (independentGapConfig also indicates whether the UE supports the FR2 inter-RAT measurement without gaps when (NG)EN-DC is not configured).

- musim-GapPreference

■ This refers to a UE capability indicator indicating whether the UE is able to provide multi-universal subscriber identity module (hereinafter MUSIM) assistance information regarding a MUSIM gap preference and supports a relevant MUSIM gap configuration, as defined in technical specification (hereinafter TS) 38.331 (musim-GapPreference indicates whether the UE supports providing MUSIM assistance information with MUSIM gap preference and related MUSIM gap configuration, as defined in TS 38.331).
■ The UE capability indicator is signaled per UE, there is no functional difference between FDD and TDD, and there is no functional difference between FR1 and FR2.
■ A UE supporting the capability supports three periodic gaps and one aperiodic gap (UE supporting this feature supports 3 periodic gaps and 1 aperiodic gap).

- concurrentMeasGap

■ This refers to a UE capability indicator indicating whether concurrent measurement gaps are supported, as described in TS 38.133 (concurrentMeasGap indicates whether the UE supports the concurrent measurements gaps as specified in TS 38.133).
■ The UE capability indicator is signaled per UE, there is no functional difference between FDD and TDD, and there is no functional difference between FR1 and FR2.
■ The capability signaling for the UE capability indicator may be configured by at least one of the following parameters (The capability signalling comprises the following parameters), and may be performed using one of the following two parameters.

♦ concurrentPerUE-OnlyMeasGap

● This refers to a UE capability indicator indicating whether one or more per-UE measurement gap configurations are supported (e.g., when a gap combination configuration identifier is 2 as described in TS 38.133) (concurrentPerUE-OnlyMeasGap indicates whether the UE supports more than 1 per-UE measurement gap configurations (i.e. gap combination configuration id = 2 as specified in TS38.133).

♦ concurrentPerUE-PerFRCombMeasGap

● This refers to a UE capability indicator indicating whether all concurrent gap combination configurations are supported, as described in TS 38.133, including support of one or more per-UE measurement gap configurations (concurrentPerUE-PerFRCombMeasGap indicates whether the UE supports all concurrent gap combination configurations as specified in TS 38.133 including support of more than 1 per-UE measurement gap configurations).
● In the case of a UE supporting the above-described FR gap (independentGapConfig), the UE capability indicator (concurrentPerUE-PerFRCombMeasGap) may indicate whether one or more per-FR measurement gap configurations are supported in a predetermined FR, whether one per-UE measurement gap configuration and one FR measurement gap configuration are simultaneously supported in a predetermined FR, or whether one or more per-UE measurement gap configurations are supported (e.g., when a gap combination configuration identifier is 2 as specified in TS 38.133) (For UE capable of per-FR gap (independentGapConfig), this field indicates whether the UE supports more than 1 per-FR gap measurement gap configurations in an FR, or simultaneous 1 per UE measurement gap plus 1 per-FR measurement gap configurations in an FR, or more than 1 per-UE measurement gap configurations (i.e. gap combination configuration id = 2 as specified in TS38.133)).

- mg-ActivationCommPRS-Meas

  ■ This refers to a UE capability indicator indicating whether the UE supports pre-configuration of a measurement gap through RRC signaling for positioning reference signal (hereinafter PRS) measurement, and supports use of a DL MAC CE from the base station to activate/deactivate the pre-configured measurement gap for PRS measurement, as described in TS 38.321 (mg-ActivationCommPRS-Meas indicates whether UE supports preconfiguration of MGs in RRC signalling for PRS measurements and the use of DL MAC CE from the gNB, as specified in TS 38.321, to activate/deactivate the preconfigured MG for PRS measurements).
  ■ The UE capability indicator is signaled per UE, there is no functional difference between FDD and TDD, and there is no functional difference between FR1 and FR2.

- mg-ActivationRequestPRS-Meas

  ■ This refers to a UE capability indicator indicating whether the UE supports pre-configuration of a measurement gap through RRC signaling for PRS measurement, and supports use of a UL MAC CE to request activation/-deactivation of the pre-configured measurement gap for PRS measurement, as described in TS 38.321 (mg-ActivationRequestPRS-Meas indicates whether UE supports preconfiguration of MGs in RRC signalling for PRS measurements and supports the use of UL MAC CE, as specified in TS38.321 [8], to request the activation/-deactivation of the preconfigured MG for PRS measurements).
  ■ The UE capability indicator is signaled per UE, there is no functional difference between FDD and TDD, and there is no functional difference between FR1 and FR2.
  ■ The UE capability indicator (mg-ActivationRequestPRS-Meas) may be signaled only for a UE supporting the above-described mg-ActivationCommPRS-Meas.

In operation 1e-25, the base station 1e-10 may transmit, to the UE 1e-05, a predetermined RRC message (e.g., RRCResume or RRCReconfiguration) including gap configuration information on one of one or more gap features supported by the UE 1e-05 (configuration information on one single gap feature). The gap feature may refer to one of the following.

- A UE supporting musim-GapPreference supports a "MUSIM gap capability"
- A UE supporting mg-ActivationCommPRS-Meas or a UE supporting mg-ActivationCommPRS-Meas and mg-ActivationRequestPRS-Meas has a capability "to be pre-configured with a measurement gap for positioning and to use the measurement gap through a medium access control (MAC) control element (CE)"
- A UE supporting concurrentMeasGap supports a "concurrent measurement gap capability"

  ■ As described above, the support of concurrentMeasGap indicates one of concurrentPerUE-OnlyMeasGap and concurrentPerUE-PerFRCombMeasGap.

The gap configuration information on one gap feature may refer to one of the following.

- MUSIM gap configuration information (MUSIM-GapConfig)

  ■ A detailed ASN.1 structure for a MUSIM gap configuration and descriptions of respective fields may be as follows.

- *MUSIM-GapConfig*

The IE *MUSIM-GapConfig* specifies the MUSIM gap configuration and controls setup/release of MUSIM gaps.

*MUSIM-GapConfig* information element

【Table 1】

```
-- ASN1START
-- TAG-MUSIM-GAPCONFIG-START

MUSIM-GapConfig-r17 ::=                     SEQUENCE {
musim-GapToReleaseList-r17          SEQUENCE (SIZE (1..3)) OF MUSIM-
GapId-r17                     OPTIONAL, -- Need N
musim-GapToAddModList-r17           SEQUENCE (SIZE (1..3)) OF MUSIM-
Gap-r17                   OPTIONAL, -- Need N
musim-AperiodicGap-r17                                  MUSIM-GapInfo-r17
OPTIONAL, -- Need N
...
}
MUSIM-Gap-r17 ::=             SEQUENCE {
musim-GapId-r17                             MUSIM-GapId-r17,
musim-GapInfo-r17                           MUSIM-GapInfo-r17

}

-- TAG-MUSIM-GAPCONFIG-STOP
-- ASN1STOP
```

[Table 2]

| MUSIM-GapConfig field descriptions |
|---|
| musim-AperiodicGap<br>Indicates the MUSIM aperiodic gap as specified in TS 38.133 [14] clause 9.1.10.<br>If UE indicates the musim-Starting-SFN-AndSubframe when requesting aperiodic gap the network can only configure the aperiodic gap with the same |
| start point or no aperiodic gap. If the field musim-Starting-SFN-AndSubframe is absent for aperiodic gap, network can configure any timing as the starting point for aperiodic gap or configure no aperiodic gap. |
| musim-GapInfo<br>Indicates the values for musim-GapLength and musim-GapRepetitionAndOffset. When network provides periodic gap, network always signals the musim-GapLength and musim-GapRepetitionAndOffset as indicated by the UE's preferred MUSIM gap configuration. |
| musim-GapToAddModList<br>List of MUSIM periodic gap patterns to add or modify. |
| musim-GapToReleaseList<br>List of MUSIM periodic gap patterns to release. |

- *MUSIM-GapInfo*

The IE *MUSIM-GapInfo* is used to indicate MUSIM gap parameters.

***MUSIM-GapInfo* information element**

【Table 3】

```
-- ASN1START
-- TAG-MUSIM-GAPINFO-START

MUSIM-GapInfo-r17 ::=                         SEQUENCE {
musim-Starting-SFN-AndSubframe-r17       MUSIM-Starting-SFN-AndSubframe-
r17                      OPTIONAL, -- Cond aperiodic
musim-GapLength-r17                              ENUMERATED {ms3, ms4, ms6,
ms10, ms20}                OPTIONAL, -- Cond gapSetup
musim-GapRepetitionAndOffset-r17       CHOICE {
ms20-r17                                    INTEGER (0..19),
ms40-r17                                    INTEGER (0..39),
ms80-r17                                    INTEGER (0..79),
ms160-r17                                   INTEGER (0..159),
ms320-r17                                   INTEGER (0..319),
ms640-r17                                   INTEGER (0..639),
ms1280-r17                                  INTEGER (0..1279),
ms2560-r17                                  INTEGER (0..2559),
ms5120-r17                                  INTEGER (0..5119),
...
}
OPTIONAL -- Cond periodic
}

MUSIM-Starting-SFN-AndSubframe-r17 ::= SEQUENCE {
starting-SFN-r17                              INTEGER (0..1023),
startingSubframe-r17                         INTEGER (0..9)
}

-- TAG-MUSIM-GAPINFO-STOP
-- ASN1STOP
```

[Table 4]

| MUSIM-GapInfo field descriptions |
|---|
| musim-GapLength<br>Indicates the length of the UE's MUSIM gap as specified in TS 38.133 [14] clause 9.1.10. This field is mandatory present for both periodic gap and aperiodic gap preference indication. |
| musim-GapRepetitionAndOffset<br>Indicates the gap repetition period in ms and gap offset in number of subframes for the periodic MUSIM gap as specified in TS 38.133 [14] clause 9.1.10. This field is mandatory present for the periodic MUSIM gap preference indication. |
| musim-Starting-SFN-AndSubframe<br>Indicates gap starting position for the aperiodic MUSIM gap. This field is optionally present for the aperiodic MUSIM gap preference indication. |
| starting-SFN<br>Indicates gap starting SFN number for the aperiodic MUSIM gap. |
| startingSubframe<br>Indicates gap starting subframe number for the aperiodic MUSIM gap. |

[Table 5]

| Conditional Presence | Explanation |
|---|---|
| aperiodic | This field is mandatory present in case of aperiodic MUSIM gap configuration. Otherwise it is absent. |
| gapSetup | The field is mandatory present upon configuration of a new MUSIM gap. The field is optionally present, Need M, otherwise. |
| periodic | This field is mandatory present in case of periodic MUSIM gap configuration. Otherwise it is absent. |

- Configuration information on a measurement gap pre-configured for positioning (posMeasGapPreConfigToAddModList)

■ A detailed ASN.1 structure for a measurement gap pre-configured for positioning and descriptions of respective fields may be as follows.

【Table 6】

```
PosMeasGapPreConfigToAddModList-r17 ::= SEQUENCE (SIZE (1..maxNrofPreConfigPosGapId-r17)) OF PosGapConfig-r17


PosGapConfig-r17 ::=                 SEQUENCE {
measPosPreConfigGapId-r17            MeasPosPreConfigGapId-r17,
gapOffset-r17                        INTEGER (0..159),
mgl-r17                              ENUMERATED {ms1dot5, ms3, ms3dot5, ms4, ms5dot5, ms6, ms10, ms20},
mgrp-r17                             ENUMERATED {ms20, ms40, ms80, ms160},
mgta-r17                             ENUMERATED {ms0, ms0dot25, ms0dot5},
gapType-r17                          ENUMERATED {perUE, perFR1, perFR2},
...
}

MeasPosPreConfigGapId-r17 ::= INTEGER (1..maxNrofPreConfigPosGapId-r17)
```

[Table 7]

| |
|---|
| gapOffset<br>Value gapOffset is the gap offset of the gap pattern with MGRP indicated in the field mgrp. The value range is from 0 to mgrp-1. If ncsgInd-r17 is present, this offset value refers to the starting point of VIL1 (the visible interruption length before the ML). |
| gapType<br>Indicates the type of this measurement gap. Value perUE indicates that it is a per UE measurement gap, value perFR1 indicates that it is an FR1 measurement gap, and value perFR2 indicates that it is an FR2 measurement gap. |
| mgl<br>Value mgl is the measurement gap length in ms of the measurement gap. If ncsgInd-r17 is not present, the measurement gap length is according to in Table 9.1.2-1 in TS 38.133 [14]. If ncsgInd-r17 is present, this field indicates the measurement length (ML) in NCSG pattern and is configured according to Table 9.1.9.3-1 in TS 38.133 [14]. Value ms1dot5 corresponds to 1.5 ms, ms3 corresponds to 3 ms and so on. If mgl-r16 is present, UE shall ignore the mgl (without suffix). Value ms1, ms2, and ms5 can only be configured if ncsgInd is present. |
| mgrp<br>If ncsgInd-r17 is not present, the mgrp field indicates the measurement gap repetition period in (ms) of the measurement gap according to Table 9.1.2-1 in TS 38.133 [14]. If ncsgInd-r17 is present, the mgrp field indicates the Visible Interruption Repetition Period (VIRP) of NCSG pattern and is configured according to Table 9.1.9.3-1 in TS 38.133 [14]. |
| mgta |

(continued)

| |
|---|
| Value mgta is the measurement gap timing advance in ms. The applicability of the measurement gap timing advance is according to clause 9.1.2 of TS 38.133 [14], or according to clause 9.1.9 of TS 38.133 [14] if ncsgInd is present. Value ms0 corresponds to 0 ms, ms0dot25 corresponds to 0.25 ms, ms0dot5 corresponds to 0.5 ms and ms0dot75 corresponds to 0.75 ms. For FR2, the network only configures 0 ms and 0.25 ms if ncsgInd is not present. If ncsgInd is present, the network only configures 0ms for per-UE NCSG and FR1 NCSG and only configures 0ms or 0.75ms for FR2 NCSG. Value ms0dot75 can only be configured if ncsgInd is present. |
| posMeasGapPreConfigToAddModList<br>List of preconfigured measurement gap for positioning to add and/or modify. All the gaps configured are associated with the measurement of PRS for RSTD, UE-RxTx Time Difference, PRS-RSRP and PRS-RSRPP as defined in TS 38.215 [9]. In this version of the specification, the network does not configure preconfigured measurement gap for positioning together with concurrent measurement gap or MUSIM gap. |
| preConfigInd<br>Indicates whether the measurement gap is a pre-configured measurement gap. |

- Concurrent measurement gap configuration information (gapToAddModList)

■ A detailed ASN.1 structure for a concurrent measurement gap and descriptions of respective fields may be as follows.

【Table 8】

```
MeasGapConfig ::=                    SEQUENCE {
gapFR2                                       SetupRelease { GapConfig }
OPTIONAL,     -- Need M
...,
[[
gapFR1                                       SetupRelease { GapConfig }
OPTIONAL,     -- Need M
gapUE                                        SetupRelease { GapConfig }
OPTIONAL      -- Need M
]],
[[
gapToAddModList-r17            SEQUENCE (SIZE (1..maxNrofGapId-r17))
OF GapConfig-r17                     OPTIONAL,     -- Need N

}

GapConfig-r17 ::=                    SEQUENCE {
measGapId-r17                        MeasGapId-r17,
gapType-r17                              ENUMERATED {perUE, perFR1,
perFR2},
gapOffset-r17                        INTEGER (0..159),
mgl-r17                              ENUMERATED {ms1, ms1dot5, ms2,
ms3, ms3dot5, ms4, ms5, ms5dot5, ms6, ms10, ms20},
mgrp-r17                             ENUMERATED {ms20, ms40, ms80,
ms160},
mgta-r17                                 ENUMERATED {ms0, ms0dot25,
ms0dot5, ms0dot75},
refServCellIndicator-r17             ENUMERATED {pCell, pSCell, mcg-
FR2}                                          OPTIONAL,      -- Cond
NEDCorNRDC
refFR2-ServCellAsyncCA-r17                                ServCellIndex
OPTIONAL,     -- Cond AsyncCA
```

```
preConfigInd-r17                                ENUMERATED  {true}
OPTIONAL,     -- Need R
ncsgInd-r17                                     ENUMERATED  {true}
OPTIONAL,     -- Need R
gapAssociationPRS-r17                           ENUMERATED  {true}
OPTIONAL,     -- Need R
gapSharing-r17                                  MeasGapSharingScheme
OPTIONAL,     -- Need R
gapPriority-r17                                 GapPriority-r17
OPTIONAL,     -- Need R
...
}
```

[Table 9]

| MeasGapConfig field descriptions |
|---|
| gapAssociationPRS<br>Indicates that PRS measurement is associated with this measurement gap. The network only includes this field for one per-UE gap or for one per-FR gap. If concurrent gap (i.e. one of the gap combination as defined in Table 9.1.8-1 in TS 38.133 [14]) is configured and no gap is configured with this field, the PRS measurement is associated with the gap configured via GapConfig (without suffix), if available. If both per-UE gap and per-FR gap are configured via GapConfig and/or GapConfig-r17, the PRS measurement is always associated with the per-UE gap. |
| gapOffset<br>Value gapOffset is the gap offset of the gap pattern with MGRP indicated in the field mgrp. The value range is from 0 to mgrp-1. If ncsgInd-r17 is present, this offset value refers to the starting point of VIL1 (the visible interruption length before the ML). |
| gapPriority<br>Indicates the priority of this measurement gap (see TS 38.133 [14], clause 9.1.8.3). Value 1 indicates highest priority, value 2 indicates second level priority, and so on. |
| gapSharing<br>Indicates the measurement gap sharing scheme that applies to this GapConfig. For applicability of the different gap sharing schemes, see TS 38.133 [14]. Value |
| scheme00 corresponds to scheme "00", value scheme01 corresponds to scheme "01", and so on. |
| gapToAddModList<br>A list of of measurement gap configuration to be added or modified. If more than one measurement gap is configured (i.e. concurrent measurement gap as specified in TS 38.133[14], clause 9.1.8), the maximum number of configured measurement gap is limited by the gap combinations defined in Table 9.1.8-1 in TS 38.133 [14]. The network configures at most one NCSG or pre-configured measurement gap for a given gap type. In this version of the specification, the network configures this field only in NR standalone. This field is used only for a UE that supports pre-configured measurement gap, concurrent measurement gap, or NCSG. In this version of the specification, the network does not configure concurrent measurement gap together with MUSIM gap or preconfigured measurement gap for positioning. |
| gapType<br>Indicates the type of this measurement gap. Value perUE indicates that it is a per UE measurement gap, value perFR1 indicates that it is an FR1 measurement gap, and value perFR2 indicates that it is an FR2 measurement gap. |

(continued)

| MeasGapConfig field descriptions |
|---|
| measGapId<br>The ID of this measurement gap configuration. |
| mgl<br>Value mgl is the measurement gap length in ms of the measurement gap. If ncsgInd-r17 is not present, the measurement gap length is according to in Table 9.1.2-1 in TS 38.133 [14]. If ncsgInd-r17 is present, this field indicates the measurement length (ML) in NCSG pattern and is configured according to Table 9.1.9.3-1 in TS 38.133 [14]. Value ms1dot5 corresponds to 1.5 ms, ms3 corresponds to 3 ms and so on. If mgl-r16 is present, UE shall ignore the mgl (without suffix). Value ms1, ms2, and ms5 can only be configured if ncsgInd is present. |
| mgrp<br>If ncsgInd-r17 is not present, the mgrp field indicates the measurement gap repetition period in (ms) of the measurement gap according to Table 9.1.2-1 in TS 38.133 [14]. If ncsgInd-r17 is present, the mgrp field indicates the Visible Interruption Repetition Period (VIRP) of NCSG pattern and is configured according to Table 9.1.9.3-1 in TS 38.133 [14]. |
| mgta |
| Value mgta is the measurement gap timing advance in ms. The applicability of the measurement gap timing advance is according to clause 9.1.2 of TS 38.133 [14], or according to clause 9.1.9 of TS 38.133 [14] if ncsgInd is present. Value ms0 corresponds to 0 ms, ms0dot25 corresponds to 0.25 ms, ms0dot5 corresponds to 0.5 ms and ms0dot75 corresponds to 0.75 ms. For FR2, the network only configures 0 ms and 0.25 ms if ncsgInd is not present. If ncsgInd is present, the network only configures 0ms for per-UE NCSG and FR1 NCSG and only configures 0ms or 0.75ms for FR2 NCSG. Value ms0dot75 can only be configured if ncsgInd is present. |
| ncsgInd<br>Indicates that the measurement gap is a NCSG as specified in 38.133 [14]. |
| refFR2ServCellAsyncCA<br>Indicates the FR2 serving cell identifier whose SFN and subframe is used for FR2 gap calculation for this gap pattern with asynchronous CA involving FR2 carrier(s). |
| refServCellIndicator<br>Indicates the serving cell whose SFN and subframe are used for gap calculation for this gap pattern. Value pCell corresponds to the PCell, pSCell corresponds to the PSCell, and mcg-FR2 corresponds to a serving cell on FR2 frequency in MCG. |

The UE 1e-05 according to the disclosure may support one or multiple independent gap features. Specifically, each independent gap feature may refer to at least one of the following.

- A capability to be configured with a MUSIM gap from the base station 1e-10 and to use the MUSIM gap
- A capability to be configured with a measurement gap pre-configured for positioning (preconfigured measurement gap for positioning) from the base station 1e-10 and to use the measurement gap through activation/deactivation via a MAC CE later
- A capability to be configured with a concurrent measurement gap from the base station 1e-10 and to use the concurrent measurement gap

The base station 1e-10 according to the disclosure may configure a gap for one gap feature for the UE 1e-05 supporting one or multiple independent gap features. Specifically,

- The base station 1e-10 does not configure a MUSIM gap together with a concurrent measurement gap or a measurement gap pre-configured for positioning (the network does not configure MUSIM gap together with concurrent measurement gap or preconfigured measurement gap for positioning). In other words, the base station 1e-10 may not configure a concurrent measurement gap and a measurement gap pre-configured for positioning for the UE 1e-05 for which a MUSIM gap is configured.
- The base station 1e-10 does not configure a measurement gap pre-configured for positioning together with a concurrent measurement gap or a MUSIM gap (the network does not configure preconfigured measurement gap for positioning together with concurrent measurement gap or MUSIM gap). In other words, the base station 1e-10 may not

configure a concurrent measurement gap and a MUSIM gap for the UE 1e-05 for which a measurement gap pre-configured for positioning is configured.

- The base station 1e-10 does not configure a concurrent measurement gap together with a MUSIM gap or a measurement gap pre-configured for positioning (the network does not configure concurrent measurement gap together with MUSIM gap or preconfigured measurement gap for positioning). In other words, the base station 1e-10 may not configure a MUSIM gap and a measurement gap pre-configured for positioning for the UE 1e-05 for which a concurrent measurement gap is configured.

FIG. 1F is an example of a signal flow diagram for an operation in which a gap is configured by a base station for a UE supporting one or more independent gap features according to another embodiment of the disclosure.

Referring to FIG. 1F, in operation 1f-15, a UE 1f-05 may be in an RRC connected mode (RRC connected state) by establishing an RRC connection with a base station 1f-10.

In operation 1f-20, the UE 1f-05 may transmit a UE capability information (e.g., UECapabilityInformation) message to the base station 1f-10. UE capability information included in the message may follow the above-described embodiment (FIG. 1E). Additionally, in this embodiment, the message may include the following information.

- jointConcurrentMG-MUSIM-Gap

■ This may refer to a UE capability indicator indicating whether the UE supports joint configuration of a concurrent measurement gap and a MUSIM gap (joint configurations of concurrent measurement gap (MG) and MUSIM gap). Alternatively, this may refer to a UE capability indicator indicating whether the UE is able to process a concurrent measurement gap and a MUSIM gap, which are configured, when the gaps collide (e.g., a capability of the UE to use a gap having a higher priority and not use (drop or delete) a gap not having the higher priority, or to use a gap having a longer gap repetition period (MGRP) and not use a gap not having the longer gap repetition period). For reference, a condition for determining that gaps collide may refer to a case in which at least one of the following is satisfied.
♦ Gap occasions overlap in the time domain (gap occasions are fully or partially overlapping in time domain)
♦ A distance between two gap occasions is equal to or smaller than 4 ms (distance between two gap occasions is equal to or smaller than 4ms)
● The distance between two gap occasions refers to a time difference between the last point of a first gap occasion and the first point of a second gap occasion, where the first gap occasion occurs earlier than the second gap occasion (the distance between two gap occasions is defined as the time difference between the ending point of the first occasion and the starting point of the second occasion, where the first gap occasion occurs earlier in time than the second gap occasion). The gap occasion may be either a MUSIM gap occasion or a measurement gap occasion (the gap occasion can be either a MUSIM gap occasion or a measurement gap occasion).
■ The UE capability indicator is signaled per UE, there is no functional difference between FDD and TDD, and there is no functional difference between FR1 and FR2.

- musim-GapPriorityPreference

■ This may refer to a UE capability indicator indicating whether the UE is able to provide MUSIM assistance information regarding a priority preference for a periodic MUSIM gap, and support a relevant priority configuration for the periodic MUSIM gap, and supports a preference for keeping colliding (collided) MUSIM gaps, as defined in TS 38.331 (musim-GapPriorityPreference indicates whether the UE supports providing MUSIM assistance information with periodic MUSIM gap priority preference and related periodic MUSIM gap priority configuration, and its preference of keeping all collided MUSIM gaps, as defined in TS 38.331).
■ The UE capability indicator is signaled per UE, there is no functional difference between FDD and TDD, and there is no functional difference between FR1 and FR2.
■ A UE supporting the capability may support the musim-GapPreference described above (UE supporting this feature (musim-GapPriorityPreference) shall support musim-GapPreference).
■ A UE supporting the capability may provide, to a base station, a periodic MUSIM gap preference and a priority preference therefor together as MUSIM assistance information.
■ For reference, both a UE supporting both capabilities of musim-GapPriorityPreference and musim-GapPreference and a UE supporting only the musim-GapPreference capability may provide only MUSIM assistance information regarding an aperiodic MUSIM gap preference to the base station and may not explicitly provide a priority preference value therefor to the base station. However, the UE supporting both capabilities of musim-GapPriorityPreference and musim-GapPreference prefers an aperiodic MUSIM gap having the highest priority, and therefore may not unnecessarily provide a priority value for an aperiodic MUSIM gap to the base station. In

contrast, the UE supporting only the musim-GapPreference capability is unable to provide a priority preference value for an aperiodic MUSIM gap to the base station (i.e., there is no priority preference value), and therefore may not provide a priority value for an aperiodic MUSIM gap to the base station. Accordingly, the base station also configures an aperiodic MUSIM gap without an explicit priority value for the UE supporting both capabilities of musim-GapPriorityPreference and musim-GapPreference and the UE supporting only the musim-GapPreference capability. However, this implies that the highest priority is configured for the aperiodic MUSIM gap for the UE supporting both capabilities of musim-GapPriorityPreference and musim-GapPreference, whereas no priority value is configured for the aperiodic MUSIM gap for the UE supporting only the musim-GapPreference capability.

In operation 1f-25, the base station 1f-10 may transmit, to the UE 1f-05, a predetermined RRC message (e.g., RRCResume or RRCReconfiguration) including one or more pieces of gap configuration information according to a predetermined condition among one or more gap features supported by the UE 1f-05. Specifically,

- If the base station 1f-10 configures, for the UE 1f-05, a measurement gap pre-configured for positioning, the base station 1f-10 does not configure a concurrent measurement gap and a MUSIM gap for the UE 1f-05. In other words, the base station 1f-10 may not configure a concurrent measurement gap and a MUSIM gap for the UE 1f-05 for which a measurement gap pre-configured for positioning is configured.
- If the base station 1f-10 does not configure, for the UE 1f-05, a measurement gap pre-configured for positioning, the base station 1f-10 may configure at least one of a concurrent measurement gap and a MUSIM gap for the UE 1f-05. In other words, the base station 1f-10 may jointly configure a concurrent measurement gap and a MUSIM gap for the UE 1f-05 for which a measurement gap pre-configured for positioning is not configured, may configure only a concurrent measurement gap, or may configure only a MUSIM gap.

For reference, the gap configuration information on one or more gap features included in the predetermined RRC message may follow the above-described embodiment (e.g., the embodiment illustrated in FIG. 1E). Additionally, in this embodiment, MUSIM gap configuration information in the message may include the following information.

- MUSIM gap configuration information (MUSIM-GapConfig)

  ■ A detailed ASN.1 structure for a MUSIM gap configuration and descriptions of respective fields may be as follows. A difference from the above-described embodiment (e.g., the embodiment illustrated in FIG. 1E) is that priority information on a periodic MUSIM gap and configuration information on an indicator (musim-GapKeep) indicating whether the UE is allowed to keep and use MUSIM gaps when the MUSIM gaps collide are added.

- *MUSIM-GapConfig*

The IE *MUSIM-GapConfig* specifies the MUSIM gap configuration and controls setup/release of MUSIM gaps.

*MUSIM-GapConfig* information element

【Table 10】

```
-- ASN1START
-- TAG-MUSIM-GAPCONFIG-START

MUSIM-GapConfig-r17 ::=                    SEQUENCE {
musim-GapToReleaseList-r17          SEQUENCE (SIZE (1..3)) OF MUSIM-GapId-r17          OPTIONAL, -- Need N
musim-GapToAddModList-r17           SEQUENCE (SIZE (1..3)) OF MUSIM-Gap-r17          OPTIONAL, -- Need N
musim-AperiodicGap-r17                                    MUSIM-GapInfo-r17          OPTIONAL, -- Need N
...,
[[
musim-GapPriorityToAddModList-r18          SEQUENCE (SIZE (1..3)) OF GapPriority-r17          OPTIONAL, -- Need N
musim-GapKeep-r18                                    ENUMERATED {true}          OPTIONAL -- Need R
]]

}
MUSIM-Gap-r17 ::=            SEQUENCE {
musim-GapId-r17                         MUSIM-GapId-r17,
musim-GapInfo-r17                       MUSIM-GapInfo-r17

}

-- TAG-MUSIM-GAPCONFIG-STOP
-- ASN1STOP
```

[Table 11]

| MUSIM-GapConfig field descriptions |
|---|
| musim-AperiodicGap<br>Indicates the MUSIM aperiodic gap as specified in TS 38.133 [14] clause 9.1.10.<br>If UE indicates the musim-Starting-SFN-AndSubframe when requesting aperiodic |
| gap the network can only configure the aperiodic gap with the same start point or no aperiodic gap. If the field musim-Starting-SFN-AndSubframe is absent for aperiodic gap, network can configure any timing as the starting point for aperiodic gap or configure no aperiodic gap. |
| musim-GapInfo<br>Indicates the values for musim-GapLength and musim-GapRepetitionAndOffset. |

(continued)

| |
|---|
| musim-GapInfo<br>When network provides periodic gap, network always signals the musim-GapLength and musim-GapRepetitionAndOffset as indicated by the UE's preferred MUSIM gap configuration. |
| musim-GapKeep<br>Indicates the UE is allowed to use "keep solution" for collided MUSIM periodic gaps. If "keep solution" is not granted, priority based solution is used as fallback solution) as specified in TS 38.133[14]. |
| musim-GapPriorityToAddModList<br>Indicates the priority of MUSIM periodic gap(s).<br>If the network includes musim-GapPriorityToAddModList-r18, it includes the same number of entries, and listed in the same order, as in musim-GapToAddModList-r17.<br>For the priority of MUSIM aperiodic gap, the MUSIM aperiodic gap is always kept (not dropped) from UE perspective in case of collisions with other gaps (i.e. all gaps including MUSIM gaps, etc). |
| musim-GapToAddModList<br>List of MUSIM periodic gap patterns to add or modify. |
| musim-GapToReleaseList<br>List of MUSIM periodic gap patterns to release. |

- *MUSIM-GapInfo*

The IE *MUSIM-GapInfo* is used to indicate MUSIM gap parameters.

***MUSIM-GapInfo* information element**

【Table 12】

```
-- ASN1START
-- TAG-MUSIM-GAPINFO-START

MUSIM-GapInfo-r17 ::=                    SEQUENCE {
musim-Starting-SFN-AndSubframe-r17       MUSIM-Starting-SFN-AndSubframe-
r17                    OPTIONAL, -- Cond aperiodic
```

```
musim-GapLength-r17                          ENUMERATED {ms3, ms4, ms6,
ms10, ms20}              OPTIONAL, -- Cond gapSetup
musim-GapRepetitionAndOffset-r17       CHOICE {
ms20-r17                                   INTEGER (0..19),
ms40-r17                                   INTEGER (0..39),
ms80-r17                                   INTEGER (0..79),
ms160-r17                                  INTEGER (0..159),
ms320-r17                                  INTEGER (0..319),
ms640-r17                                  INTEGER (0..639),
ms1280-r17                                 INTEGER (0..1279),
ms2560-r17                                 INTEGER (0..2559),
ms5120-r17                                 INTEGER (0..5119),
...
}
OPTIONAL -- Cond periodic
}

MUSIM-Starting-SFN-AndSubframe-r17 ::= SEQUENCE {
starting-SFN-r17                            INTEGER (0..1023),
startingSubframe-r17                        INTEGER (0..9)
}

-- TAG-MUSIM-GAPINFO-STOP
-- ASN1STOP
```

[Table 13]

| MUSIM-GapInfo field descriptions |
|---|
| musim-GapLength<br>Indicates the length of the UE's MUSIM gap as specified in TS 38.133 [14] clause 9.1.10. This field is mandatory present for both periodic gap and aperiodic gap preference indication. |
| musim-GapRepetitionAndOffset<br>Indicates the gap repetition period in ms and gap offset in number of subframes for the periodic MUSIM gap as specified in TS 38.133 [14] clause 9.1.10. This field is mandatory present for the periodic MUSIM gap preference indication. |
| musim-Starting-SFN-AndSubframe |
| MUSIM-GapInfo field descriptions |
| musim-GapLength<br>Indicates the length of the UE's MUSIM gap as specified in TS 38.133 [14] clause 9.1.10. This field is mandatory present for both periodic gap and aperiodic gap preference indication. |

(continued)

| MUSIM-GapInfo field descriptions |
|---|
| musim-GapLength<br>Indicates gap starting position for the aperiodic MUSIM gap. This field is optionally present for the aperiodic MUSIM gap preference indication. |
| starting-SFN<br>Indicates gap starting SFN number for the aperiodic MUSIM gap. |
| startingSubframe<br>Indicates gap starting subframe number for the aperiodic MUSIM gap. |

[Table 14]

| Conditional Presence | Explanation |
|---|---|
| aperiodic | This field is mandatory present in case of aperiodic MUSIM gap configuration. Otherwise it is absent. |
| gapSetup | The field is mandatory present upon configuration of a new MUSIM gap. The field is optionally present, Need M, otherwise. |
| periodic | This field is mandatory present in case of periodic MUSIM gap configuration. Otherwise it is absent. |

The UE 1f-05 according to the disclosure may support one or multiple independent gap features, as in the above-described embodiment (e.g., the embodiment illustrated in FIG. 1E). Additionally, for the UE 1f-05 according to the disclosure, if a measurement gap pre-configured for positioning is not configured, configuration information on a concurrent measurement gap and a MUSIM gap may be configured together. If a measurement gap pre-configured for positioning is configured jointly with a concurrent measurement gap and/or a MUSIM gap, the UE 1f-05 is unable to follow all configuration information therefor and thus may perform an RRC connection re-establishment procedure.

The base station 1f-10 according to the disclosure may configure gaps for one or more gap features for the UE 1f-05 supporting one or multiple independent gap features, as follow.

- The base station 1f-10 does not configure a MUSIM gap together with a measurement gap pre-configured for positioning, but may configure a MUSIM gap together with a concurrent measurement gap (the network does not configure MUSIM gap together with preconfigured measurement gap for positioning, but it can configure MUSIM gap together with concurrent measurement gap).
- The base station 1f-10 does not configure a measurement gap pre-configured for positioning together with a concurrent measurement gap or a MUSIM gap (the network does not configure preconfigured measurement gap for positioning together with concurrent measurement gap or MUSIM gap).
- The base station 1f-10 does not configure a concurrent measurement gap together with a measurement gap pre-configured for positioning, but may configure a concurrent measurement gap together with a MUSIM gap (the network does not configure concurrent measurement gap together with preconfigured measurement gap for positioning but it can configure concurrent measurement gap together with MUSIM gap).

For reference, a maximum number of gaps that the base station 1f-10 is able to configure for the UE 1f-05 (jointly) may be limited to a predetermined integer value (e.g., 16). In this case, the predetermined integer value may be explicitly indicated by the UE 1f-05 to the base station 1f-10 through a separate UE capability indicator, or may be a pre-determined value only for the UE 1f-05 according to the disclosure (i.e., when gap configurations for two or more independent gap features are configurable jointly).

FIG. 1G is an example of a signal flow diagram for an operation in which a gap is configured by a base station for a UE supporting one or more independent gap features according to another embodiment of the disclosure.

Referring to FIG. 1G, in operation 1g-15 a UE 1g-05 may be in an RRC connected mode (RRC connected state) by establishing an RRC connection with a base station 1g-10.

In operation 1g-20, the UE 1g-05 may transmit a UE capability information (e.g., UECapabilityInformation) message to the base station 1g-10. UE capability information included in the message may follow at least one of the above-described embodiments (the embodiments illustrated in FIG. 1E and/or FIG. 1F). Additionally, in this embodiment, the message may include the following information.

- jointMUSIM-ConcurrentMG-OrMUSIM-PrePosMG

  ■ This may refer to a UE capability indicator indicating whether the UE supports joint configuration of a concurrent measurement gap and a MUSIM gap and joint configuration of a MUSIM gap and a measurement gap pre-configured for positioning. Alternatively, this may refer to a UE capability indicator indicating whether the UE is able to process a concurrent measurement gap and a MUSIM gap, which are configured together, when the gaps collide (e.g., a capability of the UE to use a gap having a higher priority and not use (drop) a gap not having the higher priority, or to use a gap having a longer gap repetition period and not use a gap not having the longer gap repetition period). For reference, a condition for determining that gaps collide may follow the above-described embodiment (the embodiment illustrated in FIG. 1F). There is no separate processing requirement for a case in which a MUSIM gap collides with an (activated) measurement gap pre-configured for positioning.

  ■ The UE capability indicator is signaled per UE, there is no functional difference between FDD and TDD, and there is no functional difference between FR1 and FR2.

In operation 1g-25, the base station 1g-10 may transmit, to the UE 1g-05, a predetermined RRC message (e.g., RRCResume or RRCReconfiguration) including one or more pieces of gap configuration information according to a predetermined condition among one or more gap features supported by the UE 1g-05. Specifically,

- If the base station 1g-10 configures, for the UE 1g-05, a measurement gap pre-configured for positioning, the base station 1g-10 is unable to configure a concurrent measurement gap for the UE 1g-05 but may configure a MUSIM gap.
- If the base station 1g-10 does not configure, for the UE 1g-05, a measurement gap configured for positioning, the base station 1g-10 may jointly configure a concurrent measurement gap and a MUSIM gap for the UE 1g-05, may configure only a concurrent measurement gap, or may configure only a MUSIM gap.

For reference, the gap configuration information on one or more gap features included in the predetermined RRC message may follow at least one of the above-described embodiments (e.g., the embodiments illustrated in FIG. 1E and/or FIG. 1F).

The UE 1g-05 according to the disclosure may support one or multiple independent gap features, as in the above-described embodiment (e.g., the embodiment illustrated in FIG. 1E). Additionally, for the UE 1g-05 according to the disclosure, a measurement gap pre-configured for positioning, a concurrent measurement gap, and a MUSIM gap are not configurable together, but configuration information on a concurrent measurement gap and a MUSIM gap may be configured together, or a measurement gap pre-configured for positioning and a MUSIM gap may be configured together. If a measurement gap pre-configured for positioning is configured together with a concurrent measurement gap, the UE 1g-05 is unable to follow all configuration information therefor and thus may perform an RRC connection re-establishment procedure.

The base station 1g-10 according to the disclosure may configure gaps for one or more gap features for the UE 1g-05 supporting one or multiple independent gap features, as follow.

- The base station 1g-10 may configure a MUSIM gap together with a measurement gap pre-configured for positioning or configure a MUSIM gap together with a concurrent measurement gap, but is unable to configure a MUSIM gap together with a measurement gap pre-configured for positioning and a concurrent measurement gap (the network can configure MUSIM gap together with either preconfigured measurement gap for positioning or concurrent measurement gap but it does not configure MUSIM gap together with both preconfigured measurement gap for positioning and concurrent measurement gap).
- The base station 1g-10 does not configure a measurement gap pre-configured for positioning together with a concurrent measurement gap, but may configure a measurement gap pre-configured for positioning together with a MUSIM gap (the network does not configure preconfigured measurement gap for positioning together with concurrent measurement gap but it can configure preconfigured measurement gap for positioning together with MUSIM gap).
- The base station 1g-10 does not configure a concurrent measurement gap together with a measurement gap pre-configured for positioning, but may configure a concurrent measurement gap together with a MUSIM gap (the network does not configure concurrent measurement gap together with preconfigured measurement gap for positioning but it can configure concurrent measurement gap together with MUSIM gap).

For reference, a maximum number of gaps that the base station 1g-10 is able to configure for the UE 1g-05 (jointly) may be limited to a predetermined integer value (e.g., 16). In this case, the predetermined integer value may be explicitly indicated by the UE 1g-05 to the base station 1g-10 through a separate UE capability indicator, or may be a predetermined value only for the UE 1g-05 according to the disclosure (i.e., when gap configurations for two or more independent gap features are configurable jointly).

FIG. 1H is an example of a signal flow diagram for an operation in which a gap is configured by a base station for a UE supporting one or more independent gap features according to another embodiment of the disclosure.

Referring to FIG. 1H, in operation 1h-15 a UE 1h-05 may be in an RRC connected mode (RRC connected state) by establishing an RRC connection with a base station 1h-10.

In operation 1h-20, the UE 1h-05 may transmit a UE capability information (e.g., UECapabilityInformation) message to the base station 1h-10. UE capability information included in the message may follow at least one of the above-described embodiments (the embodiments illustrated in FIG. 1E, FIG. 1F, and/or FIG. 1G). Additionally, in this embodiment, the message may include the following information.

- jointMUSIM-ConcurrentMG-PrePosMG (or jointMUSIM-ConcurrentMG-MUSIM-PrePosMG)

  ■ This may refer to a UE capability indicator indicating whether the UE supports joint configuration of any combination of a MUSIM gap, a concurrent measurement gap, and a measurement gap pre-configured for positioning. The UE may have, through the capability indicator, a capability to process a concurrent measurement gap and a MUSIM gap, which are configured jointly, when the gaps collide (e.g., a capability of the UE to use a gap having a higher priority and not use (drop) a gap not having the higher priority, or to use a gap having a longer gap repetition period and not use a gap not having the longer gap repetition period). For reference, a condition for determining that gaps collide may follow the above-described embodiment (the embodiment illustrated in FIG. 1F). There may be no separate processing requirement for a case in which a MUSIM gap collides with an (activated) measurement gap pre-configured for positioning.

  ■ The UE capability indicator is signaled per UE, there is no functional difference between FDD and TDD, and there is no functional difference between FR1 and FR2.

  ■ A UE supporting the capability may have gaps configured jointly up to a maximum of X (indicating a predetermined integer value, for example, 16).

In operation 1h-25, the base station 1h-10 may transmit a predetermined RRC message (e.g., RRCResume or RRCReconfiguration) including one or more pieces of gap configuration information among one or more gap features supported by the UE 1h-05 without any separate restriction. Specifically,

- The base station 1g-10 may configure, for the UE 1g-05, at least one of a MUSIM gap, a concurrent measurement gap, and a measurement gap pre-configured for positioning. That is, even if the base station 1g-10 configures three types of gaps jointly for the UE 1g-05, the UE 1g-05 may apply the three gaps.

For reference, the gap configuration information on one or more gap features included in the predetermined RRC message may follow at least one of the above-described embodiments (e.g., the embodiments illustrated in FIG. 1E and/or FIG. 1F).

The UE 1g-05 according to the disclosure may support one or multiple independent gap features, as in the above-described embodiment (e.g., the embodiment illustrated in FIG. 1E). Additionally, for the UE 1g-05 according to the disclosure, a measurement gap pre-configured for positioning, a concurrent measurement gap, and a MUSIM gap may be configured jointly.

The base station 1g-10 according to the disclosure may jointly configure a concurrent measurement gap, a measurement gap pre-configured for positioning, a MUSIM gap for the UE 1g-05 supporting one or multiple independent gap features. However, a maximum number of gaps that the base station 1g-10 is able to configure for the UE 1g-05 (jointly) may be limited to a predetermined integer value (e.g., 16). In this case, the predetermined integer value may be explicitly indicated by the UE 1g-05 to the base station 1g-10 through a separate UE capability indicator.

FIG. 1I is an example of a signal flow diagram for an operation in which a gap is configured by a base station for a UE supporting one or more independent gap features according to another embodiment of the disclosure.

Referring to FIG. 1I, in operation 1i- 15 a UE 1i-05 may be in an RRC connected mode (RRC connected state) by establishing an RRC connection with a base station 1i-10.

In operation 1i-20, the UE 1i-05 may transmit a UE capability information (e.g., UECapabilityInformation) message to the base station 1i-10. UE capability information included in the message may follow at least one of the above-described embodiments (the embodiments illustrated in FIG. 1E, FIG. 1F, FIG. 1G, and/or FIG. 1H). For example, the message may include the following information and this may follow the above-described embodiment (the embodiment illustrated in FIG. 1F).

- musim-GapPriorityPreference

For example, a case where musim-GapPriorityPreference is included in UECapabilityInformation may indicate

that the UE 1i-05 supports joint configuration of a concurrent measurement gap and a MUSIM gap, according to the embodiment illustrated in FIG. 1F. Alternatively, the case may indicate that the UE 1i-05 is able to process a concurrent measurement gap and a MUSIM gap, which are configured, when the gaps collide (e.g., a capability of the UE to use a gap having a higher priority and not use (drop) a gap not having the higher priority, or to use a gap having a longer gap repetition period and not use a gap not having the longer gap repetition period). For reference, a condition for determining that gaps collide may follow the above-described embodiment (the embodiment illustrated in FIG. 1F).

Alternatively, a case where musim-GapPriorityPreference is included in UECapabilityInformation may indicate that the UE 1i-05 supports joint configuration of a concurrent measurement gap and a MUSIM gap and joint configuration of a MUSIM gap and a measurement gap pre-configured for positioning, according to the embodiment illustrated in FIG. 1G.

Alternatively, a case where musim-GapPriorityPreference is included in UECapabilityInformation may indicate that the UE 1i-05 supports joint configuration of any combination of a MUSIM gap, a concurrent measurement gap, and a measurement gap pre-configured for positioning, according to the embodiment illustrated in FIG. 1H.

In operation 1i-25, the base station 1i-10 may transmit a predetermined RRC message (e.g., RRCResume or RRCReconfiguration) including gap configuration information for one or more of one or more gap features supported by the UE 1i-05. In this case, the base station 1i-10 may configure, for the UE 1i-05, one or more pieces of gap configuration information among the one or more gap features according to at least one of the above-described embodiments (the embodiments illustrated in FIG. 1E, FIG. 1F, FIG. 1G, and/or FIG. 1H). For reference, a maximum number of gaps that the base station 1i-10 configures for the UE 1i-05 may be limited to a predetermined integer value (e.g., 16).

For example, as in the embodiment illustrated in FIG. 1F, in a case where musim-GapPriorityPreference is included in UECapabilityInformation and this indicates that the UE 1i-05 supports joint configuration of a concurrent measurement gap and a MUSIM gap, when the base station 1i-10 configures a measurement gap pre-configured for positioning for the UE 1i-05, the base station 1i-10 may not configure a concurrent measurement gap and a MUSIM gap for the UE 1i-05. In other words, the base station 1i-10 may not configure a concurrent measurement gap and a MUSIM gap for the UE 1f-05 for which a measurement gap pre-configured for positioning is configured. In addition, if the base station 1i-10 does not configure, for the UE 1i-05, a measurement gap pre-configured for positioning, the base station 1i-10 may configure at least one of a concurrent measurement gap and a MUSIM gap for the UE 1i-05. In other words, the base station 1i-10 may jointly configure a concurrent measurement gap and a MUSIM gap for the UE 1i-05 for which a measurement gap pre-configured for positioning is not configured, may configure only a concurrent measurement gap, or may configure only a MUSIM gap. FIG. 1J is an example of a signal flow diagram illustrating processing of colliding MUSIM gaps by a UE (multi-USIM UE, hereinafter MUSIM UE) supporting multiple universal subscriber identity modules (USIMs) according to an embodiment of the disclosure.

A MUSIM UE 1j-01 according to an embodiment of the disclosure may refer to a UE supporting two or more USIMs. In the disclosure, for the sake of description, a dual-USIM UE supporting two USIMs is considered. A dual-USIM UE may perform transmission to a base station associated with one USIM or to base stations associated with respective USIMs at a given time. Similarly, a dual-USIM UE may perform reception from a base station associated with one USIM or perform simultaneous reception from base stations associated with respective USIMs at a given time.

Referring to FIG. 1J, the MUSIM UE 1j-01 may be referred to as a UE supporting multiple USIMs in a single device. For example, the MUSIM UE 1j-01 may indicate a USIM 1 UE 1j-02 when operating in USIM 1, and may indicate a USIM 2 UE 1j-03 when operating in USIM 2. Base stations 1j-04 and 1j-05 (networks, NWs) associated with the respective USIMs may not recognize the MUSIM UE 1j-01 as a single UE, but may recognize each USIM UE as a single UE. For example, base station 1 1j-04 may recognize the USIM 1 UE 1j-02 as one UE, and base station 2 1j-05 may recognize the USIM 2 UE 1j-03 as one UE. For the sake of convenience in description in the following embodiments of the disclosure, when the MUSIM UE 1j-01 performs communication by using USIM 1, the MUSIM UE 1j-01 is referred to as the USIM 1 UE 1j-02, and when the MUSIM UE 1j-01 performs communication by using USIM 2, the MUSIM UE 1j-01 is referred to as the USIM 2 UE 1j-03. That is, the MUSIM UE 1j-01 may be the USIM 1 UE 1j-02 or the USIM 2 UE 1j-03 according to which of USIM 1 and USIM 2 is used.

In operation 1j-13, the USIM 1 UE 1j-02 may be in an RRC connected mode (RRC_CONNECTED) by establishing an RRC connection with base station 1 1j-04. On the contrary, as in operation 1j-10, the USIM 2 UE 1j-03 may be in an RRC idle mode (RRC_IDLE) or an RRC inactive mode (RRC_INACTIVE) by not establishing an RRC connection with base station 2 1j-05. Of course, the content of the disclosure may be identically applied even to a case where the USIM 2 UE 1j-03 may be in an RRC connected mode (RRC_CONNECTED) by establishing an RRC connection with base station 2 1j-05.

In operation 1j-15, the USIM 1 UE 1j-02 may transmit a UE capability information message (e.g., UECapabilityInformation) to the base station 1j-04. The message may include one of the following pieces of information.

- musim-GapPreference

  ■ A description for the UE capability indicator may follow the above-described embodiment (the embodiment

illustrated in FIG. 1E).

- musim-GapPriorityPreference

■ A description for the UE capability indicator may follow the above-described embodiment (the embodiment illustrated in FIG. 1F). A UE supporting the capability may keep colliding periodic MUSIM gaps according to an indication (e.g., musim-GapKeep) of the base station. For reference, a criterion for determining that multiple MUSIM gaps collide by the UE may follow the above-described embodiment (the embodiment illustrated in FIG. 1F).

In operation 1j-20, base station 1 1j-04 may transmit otherConfig containing musim-GapAssistanceConfig and musim-GapPriorityAssistanceConfig to the USIM 1 UE 1j-02. For reference, the otherConfig may be transmitted to the UE 1j-02 through a predetermined RRC message (e.g., RRCReconfiguration). The UE 1j-02 having received the message may perform the following operations.

- If musim-GapAssistanceConfig is configured as setup (if musim-GapAssistanceConfig is set to setup)

■ The UE 1j-02 may consider that the UE is configured to provide MUSIM assistance information for a gap preference to the base station 1j-04 (consider itself to be configured to provide MUSIM assistance information for gap preference).

- Otherwise (e.g., if musim-GapAssistanceConfig is set to release)

■ The UE 1j-02 may consider that the UE is not configured to provide MUSIM assistance information for a gap preference to the base station 1j-04, and if a T346h timer is running, may stop the T346h timer (consider itself not to be configured to provide MUSIM assistance information for gap preference and stop timer T346h, if running).

- If musim- GapPriorityAssistanceConfig is configured as setup (if musim-GapPriorityAssistanceConfig is set to setup)

■ The UE 1j-02 may consider that the UE is configured to provide MUSIM assistance information for a gap priority to the base station 1j-04 (consider itself to be configured to provide MUSIM assistance information for gap(s) priority).

- Otherwise (e.g., if musim-GapPriorityAssistanceConfig is set to release)

■ The UE 1j-02 may consider that the UE is not configured to provide MUSIM assistance information for a gap priority to the base station 1j-04 (consider itself not to be configured to provide MUSIM assistance information for gap(s) priority).

For reference, a description for the musim-GapAssistanceConfig and musim-GapPriorityAssistanceConfig and the Abstract Syntax Notation. One (ASN.1) may be as follows.

【Table 15】

```
OtherConfig-v1700 ::=                    SEQUENCE {
...
musim-GapAssistanceConfig-r17                     SetupRelease   {MUSIM-
GapAssistanceConfig-r17}                      OPTIONAL, -- Need M



MUSIM-GapAssistanceConfig-r17 ::= SEQUENCE {
musim-GapProhibitTimer-r17              ENUMERATED  {s0,  s0dot1,  s0dot2,
s0dot3, s0dot4, s0dot5, s1, s2, s3, s4, s5, s6, s7, s8, s9, s10}
}

MUSIM-LeaveAssistanceConfig-r17 ::=        SEQUENCE {
musim-LeaveWithoutResponseTimer-r17           ENUMERATED  {ms10,  ms20,
ms40, ms60, ms80, ms100, spare2, spare1}
}
OtherConfig-v18xy ::=                    SEQUENCE {
musim-GapPriorityAssistanceConfig-r18                ENUMERATED  {true}
OPTIONAL, -- Cond musimGapConfig
```

[Table 16]

| |
|---|
| musim-GapAssistanceConfig<br>Configuration information for indicating the UE to report assistance information regarding a gap preference (Configuration for the UE to report assistance information for gap preference). |
| musim-GapPriorityAssistanceConfig<br>Configuration information indicating allowance for the UE to provide MUSIM assistance information regarding gap(s) priority information and/or a MUSIM gaps keep preference (Indicates the UE is allowed to provide MUSIM assistance information for gap(s) priority and/or MUSIM gaps keep preference). |
| musim-GapProhibitTimer<br>A prohibit timer for reporting MUSIM assistance information regarding a gap preference (Prohibit timer for MUSIM assistance information reporting for gap preference). |

[Table 17]

| Conditional Presence | Explanation |
|---|---|
| musimGapConfig | This field is optionally present, need R, if musim-GapAssistanceConfig-r17 is configured; otherwise it is absent, need R. |

In operation 1j-25, the USIM 2 UE 1j-03 may inform (notify) the USIM 1 UE 1j-02 of pieces of information (e.g., one or more pieces of MUSIM gap configuration information) necessary for performing operations (e.g., cell reselection,

system information reception, frequency measurement, etc.) required in the RRC idle mode or RRC inactive mode.

In operation 1j-30, the USIM 1 UE 1j-02 may transmit a UE assistance information message (e.g., UEAssistanceInformation) containing MUSIM assistance information (MUSIM-Assistance) to base station 1 1j-04. The MUSIM-Assistance may include at least one of the following pieces of information.

- musim-GapPreferenceList

  ■ This refers to a list configured by one or multiple MUSIM-GapInfos, and reference may be made to the above-described embodiment (the embodiment illustrated in FIG. 1E) for a description of each MUSIM-GapInfo.
  ■ Up to three MUSIM-GapInfos for periodic MUSIM gaps and up to one MUSIM-GapInfo for aperiodic MUSIM gaps may be contained in the musim-GapPreferenceList.

- musim-GapPriorityPreferenceList

  ■ This refers to a list configured by one or multiple gap priority values (GapPriority).
  ■ A gap priority value indicates a priority for a gap configuration, and may be indicated by one integer value. For example, the gap priority value may be indicated as "1," "2," or "16." The smaller the indicated value, the higher the priority may be indicated. For example, the value of "1" may represent the highest priority, and the value of "2" may represent the second highest priority (second level priority).
  ■ Each gap priority value may be mapped to each periodic MUSIM gap included in musim-GapPreferenceList through one of the following methods.
  ♦ Method 1: musim-GapPriorityPreferenceList may be mapped in accordance with the order of periodic MUSIM gaps contained in musim-GapPreferenceList. For example, if the musim-GapPreferenceList is configured as {periodic MUSIM gap a, aperiodic MUSIM gap b, periodic MUSIM gap c} and the musim-GapPriorityPreferenceList is configured as {Gap Priority x, Gap Priority y}, the first priority value "Gap Priority x" may be mapped to "periodic MUSIM gap a", and the second priority value "Gap Priority y" may be mapped to "periodic MUSIM gap c." That is, a periodic MUSIM gap among MUSIM gaps contained in the musim-GapPreferenceList to which each gap priority value contained in the musim-GapPriorityPreferenceList is mapped may be identified without a separate indicator.
  ♦ Method 2: Each entry included in musim-GapPriorityPreferenceList may be configured by a gap priority value and an indicator indicating a periodic MUSIM gap in musim-GapPreferenceList to which the value is mapped.

- musim-GapKeepPreference

In operation 1j-35, base station 1 1j-04 may transmit a predetermined RRC message (e.g., RRCReconfiguration) containing musim-GapConfig to the USIM 1 UE 1j-02. The musim-GapConfig may include at least one of the following.

- A list (musim-GapToReleaseList) for releasing a configured MUSIM gap

  ■ The list may be configured by one or more identifiers (MUSIM-GapId).
  ■ A periodic MUSIM gap configured for the UE may be released through the list.

- A list (musim-GapToAddModList) of MUSIM gaps to be added or modified

  ■ The list may be configured by one or more MUSIM gaps (MUSIM-Gap), and each MUSIM gap may be configured by MUSIM gap configuration information (MUSIM-GapInfo) and an identifier (MUSIM-GapId) therefor.
  ■ One or more periodic MUSIM gaps may be configured for the UE through the list.

- Aperiodic MUSIM gap configuration information (musim-AperiodicGap)

  ■ An aperiodic MUSIM gap may be configured for the UE through MUSIM gap configuration information (MUSIM-GapInfo).

- A list (musim-GapPriorityToAddModList) of MUSIM gap priorities to be added or modified

  ■ The list may be configured by one or more MUSIM gap priority values (GapPriority).
  ■ A gap priority value for each periodic MUSIM gap may be configured for the UE through the list.

- An indicator (musim-GapKeep) indicating whether keeping and using of colliding periodic MUSIM gaps is allowed

■ Through the indicator, the UE may be configured to keep and use periodic MUSIM gaps satisfying at least one of the following conditions.

♦ Condition 1: Gap occasions overlap in the time domain (gap occasions are fully or partially overlapping in time domain)

♦ Condition 2: A distance between two gap occasions is equal to or smaller than 4 ms (distance between two gap occasions is equal to or smaller than 4ms)

● The distance between two gap occasions refers to a time difference between the last point of a first gap occasion and the first point of a second gap occasion, where the first gap occasion occurs earlier than the second gap occasion (the distance between two gap occasions is defined as the time difference between the ending point of the first occasion and the starting point of the second occasion, where the first gap occasion occurs earlier in time than the second gap occasion)

The UE 1j-02 having received the musim-GapConfig may perform the following operations.

- If the musim-GapConfig is configured as setup (if musim-GapConfig is set to setup)

■ For each musim-GapId included in the received musim-GapToReleaseList, the UE may release the periodic MUSIM gap configuration information associated with the musim-GapId (for each musim-GapId included in the received musim-GapToReleaseList, the UE shall release the periodic MUSIM gap configuration associated with the musim-GapId).

■ For each musim-Gap included in the received musim-GapToAddModList (for each MUSIM-Gap included in the received musim-GapToAddModList)

♦ The UE may set up a periodic MUSIM gap configuration indicated by the MUSIM-Gap according to the received musim-GapRepetitionAndOffset (the UE shall setup periodic MUSIM gap configuration indicated by the MUSIM-Gap in accordance with the received musim-GapRepetitionAndOffset). musim-GapRepetition and an Offset value are provided according to the following condition (providing musim-GapRepetition and Offset value for the following condition), and the first subframe of each periodic MUSIM gap occurs at a system frame number (SFN) and a subframe of an NR PCell meeting the following condition (the first subframe of each periodic MUSIM gap occurs at an SFN and subframe of the NR PCell meeting the following condition).

Condition:

$$\text{SFN mod T} = \text{FLOOR}(\text{Offset}/10);$$

subframe = Offset mod 10;
with

$$T = \text{musim-GapRepetition}/10;$$

♦ The UE may set up a MUSIM gap priority configuration indicated by configured musim-GapPriorityToAddModList for each periodic MUSIM gap (set the MUSIM gap priority configuration indicated by musim-GapPriority, if configured, for each periodic MUSIM gap).

♦ The UE may configure musim-GapKeep if all collided MUSIM gaps are configured to be kept (set the musim-GapKeep, if all collided MUSIM gaps are configured to be kept). In other words, if the base station indicates musim-GapKeep, the UE may keep and use all colliding MUSIM gaps (use keep solution), without determining which colliding MUSIM gap to use or not to use, based on priority.

■ If musim-AperiodicGap is included (if musim-AperiodicGap is included)

♦ The UE may set up an aperiodic MUSIM gap configuration indicated by the musim-AperiodicGap according to the received musim-Starting-SFN-AndSubframe (setup aperiodic MUSIM gap configuration indicated by the musim-AperiodicGap in accordance with the received musim-Starting-SFN-AndSubframe). The first subframe of an aperiodic MUSIM gap may occur at an SFN and a subframe of an NR PCell meeting the following condition (the first subframe of aperiodic MUSIM gap occurs at an SFN and subframe of the NR PCell meeting the following condition).

Condition:

$$SFN = starting\text{-}SFN;$$

Subframe = startingSubframe;

- If musim-Gapconfig is configured as release (else if musim-Gapconfig is set to release)

  ■ The UE may release a MUSIM gap configuration (the UE shall release the MUSIM gap configuration).

In operation 1j-40, the USIM 1 UE 1j-02 may transmit a predetermined RRC message (e.g., RRCReconfigurationComplete) to base station 1 1j-04 in response to operation 1j-35.

In operation 1j-45, the USIM 1 UE 1j-02 may determine whether the MUSIM gaps set up in operation 1j-35 collide. That is, if MUSIM gap occasions overlap in the time domain or if the distance between MUSIM gap occasions is less than or equal to 4 ms, the UE 1j-02 may determine that the MUSIM gaps collide.

In operation 1j-50, when it is determined that there are colliding MUSIM gaps in operation 1j-45, the USIM 1 UE 1j-02 may determine which MUSIM gaps to maintain or discard (drop) thereamong. Specifically,

- If all the colliding MUSIM gaps are periodic MUSIM gaps:

  ■ If musim-GapKeep is indicated:
  ♦ The UE 1j-02 may keep the colliding periodic MUSIM gaps.
  ■ Otherwise (i.e., musim-GapKeep is not indicated):
  ♦ The UE 1j-02 may keep a periodic MUSIM gap having the highest priority among the colliding periodic MUSIM gaps and discard the remaining periodic MUSIM gaps (for each collision, MUSIM gap with highest priority among the colliding occasions shall be kept and the rest shall be dropped). For reference, a smaller GapPriority value configured in operation 1j-35 may indicate a higher priority.

- If an aperiodic MUSIM gap and a periodic MUSIM gap(s) collide:

  ■ Regardless of whether musim-GapKeep is indicated, the UE 1j-02 may keep the aperiodic MUSIM gap and discard the periodic MUSIM gap(s). This is because, as described above, aperiodic MUSIM gaps always have the highest priority, and in operation 1j-35, the UE 1j-02 applies musim-GapKeep before configuring an aperiodic MUSIM gap. Alternatively, this is because the musim-GapKeep indicated by the base station 1j-04 is configured for the UE 1j-02 to keep colliding periodic MUSIM gaps.

For reference, operations 1j-45 and 1j-50 may be performed before operation 1j-35.

In operation 1j-60, the USIM 1 UE 1j-02 may not perform transmission and reception operations with the base station 1 1j-04 during a MUSIM gap determined to be used. In other words, when there occurs a MUSIM gap determined not to be discarded and to be used in operation 1j-50, the UE 1j-02 may not perform transmission and reception operations with base station 1 1j-04 (e.g., NR serving cells) during the gap. In contrast, in operation 1j-55, the USIM 2 UE 1j-03 may perform a necessary operation during the MUSIM gap. That is, the USIM 2 UE 1j-03 may perform a necessary operation (e.g., a cell selection or cell reselection operation) with base station 2 1j-05.

The USIM 1 UE 1j-02 according to the disclosure may, in a case where musim-GapKeep is indicated, when periodic MUSIM gaps collide, keep and use the periodic MUSIM gaps. However, even if musim-GapKeep is indicated, when a periodic MUSIM gap (s) and an aperiodic MUSIM gap collide, the UE 1j-02 may keep and use only the aperiodic MUSIM gap and discard the periodic MUSIM gaps. However, this may cause the USIM 2 UE 1j-03 to fail to successfully perform a necessary operation. For example, the USIM 2 UE 1j-03 needs to use both an aperiodic MUSIM gap and a periodic MUSIM gap which collide in order to successfully acquire system information broadcast by base station 2 1j-05. However, the periodic MUSIM gap is discarded and thus the USIM 2 UE is unable to use the periodic MUSIM gap, thereby experiencing a delay in successfully acquiring the system information.

The base station 1 1j-04 according to the disclosure may configure musim-GapKeep for the USIM 1 UE 1j-02 so as to keep and use periodic MUSIM gaps that may collide. However, this may be applied only to collisions between periodic MUSIM gaps, and may not be applied to collisions between an aperiodic MUSIM gap and a periodic MUSIM gap.

FIG. 1K is an example of a signal flow diagram illustrating processing of colliding MUSIM gaps by a UE (MUSIM UE) supporting multiple USIMs according to another embodiment of the disclosure.

A MUSIM UE 1k-01 according to an embodiment of the disclosure may refer to a UE supporting two or more USIMs. In the disclosure, for the sake of description, a dual-USIM UE supporting two USIMs is considered. A dual-USIM UE may perform transmission to a base station associated with one USIM or to base stations associated with respective USIMs at a given time. Similarly, a dual-USIM UE may perform reception from a base station associated with one USIM or perform simultaneous reception from base stations associated with respective USIMs at a given time.

Referring to FIG. 1K, the MUSIM UE 1k-01 may be referred to as a UE supporting multiple USIMs in a single device. For example, the MUSIM UE 1k-01 may indicate a USIM 1 UE 1k-02 when operating in USIM 1, and may indicate a USIM 2 UE 1k-03 when operating in USIM 2. Base stations (NWs) 1k-04 and 1k-05 associated with the respective USIMs may not recognize the MUSIM UE 1k-01 as a single UE, but may recognize each USIM UE as a single UE. For example, base station 1 1k-04 may recognize the USIM 1 UE 1k-02 as one UE, and base station 2 1k-05 may recognize the USIM 2 UE 1k-03 as one UE. For the sake of convenience in description in the following embodiments of the disclosure, when the MUSIM UE 1k-01 performs communication by using USIM 1, the MUSIM UE is referred to as the USIM 1 UE 1k-02, and when the MUSIM UE 1k-01 performs communication by using USIM 2, the MUSIM UE is referred to as the USIM 2 UE 1k-03. That is, the MUSIM UE 1k-01 may be the USIM 1 UE 1k-02 or the USIM 2 UE 1k-03 according to which of USIM 1 and USIM 2 is used.

In operation 1k-15, the USIM 1 UE 1k-02 may be in an RRC connected mode (RRC_CONNECTED) by establishing an RRC connection with base station 1 1k-04. On the contrary, in operation 1k-10, the USIM 2 UE 1k-03 may be in an RRC idle mode (RRC_IDLE) or an RRC inactive mode (RRC_INACTIVE) by not establishing an RRC connection with base station 2 1k-05. Of course, the content of the disclosure may be identically applied even to a case where the USIM 2 UE 1k-03 may be in an RRC connected mode (RRC_CONNECTED) by establishing an RRC connection with base station 2 1k-05.

In operation 1k-15, the USIM 1 UE 1k-02 may transmit a UE capability information message (e.g., UECapabilityInformation) to the base station 1k-04. The message may include at least one of the following pieces of information.

- musim-GapPreference

  ■ A description for the UE capability indicator may follow the above-described embodiment (the embodiment illustrated in FIG. 1E).

- musim-GapPriorityPreference

  ■ A description for the UE capability indicator may follow the above-described embodiment (the embodiment illustrated in FIG. 1F). A UE supporting the capability may keep all colliding MUSIM gaps according to an indication (e.g., musim-GapKeep) of the base station. That is, unlike the above-described embodiment (the embodiment illustrated in FIG. 1J), the UE supporting the capability according to the disclosure may keep and use both an aperiodic MUSIM gap and a periodic MUSIM gap even when the gaps collide. For reference, a criterion for determining that multiple MUSIM gaps collide by the UE 1k-01 may follow the above-described embodiment (the embodiment illustrated in FIG. 1F).

In operation 1k-20, base station 1 1k-04 may transmit otherConfig containing musim-GapAssistanceConfig and musim-GapPriorityAssistanceConfig to the USIM 1 UE 1k-02. An operation of the UE 1k-02 having received same may follow the above-described embodiment (the embodiment illustrated in FIG. 1J).

In operation 1k-25, the USIM 2 UE 1k-03 may inform the USIM 1 UE 1k-02 of pieces of information (e.g., one or more pieces of MUSIM gap configuration information) necessary for performing operations (e.g., cell reselection, system information reception, frequency measurement, etc.) required in the RRC idle mode or RRC inactive mode.

In operation 1k-30, the USIM 1 UE 1k-02 may transmit a UE assistance information message (e.g., UEAssistanceInformation) containing MUSIM assistance information (MUSIM-Assistance) to base station 1 1k-04. Information that may be included in the MUSIM-Assistance may follow the above-described embodiment (the embodiment illustrated in FIG. 1J).

In operation 1k-35, base station 1 1k-04 may transmit a predetermined RRC message (e.g., RRCReconfiguration) containing musim-GapConfig to the USIM 1 UE 1k-02. The musim-GapConfig may include at least one of the following.

- A list (musim-GapToReleaseList) for releasing a configured MUSIM gap

  ■ The list may be configured by one or more identifiers (MUSIM-GapId).
  ■ A periodic MUSIM gap configured for the UE may be released through the list.

- A list (musim-GapToAddModList) of MUSIM gaps to be added or modified

  ■ The list may be configured by one or more MUSIM gaps (MUSIM-Gap), and each MUSIM gap may be configured by MUSIM gap configuration information (MUSIM-GapInfo) and an identifier (MUSIM-GapId) therefor.
  ■ One or more periodic MUSIM gaps may be configured for the UE through the list.

- Aperiodic MUSIM gap configuration information (musim-AperiodicGap)

  ■ An aperiodic MUSIM gap may be configured for the UE through MUSIM gap configuration information (MUSIM-GapInfo).

- A list (musim-GapPriorityToAddModList) of MUSIM gap priorities to be added or modified

  ■ The list may be configured by one or more MUSIM gap priority values (GapPriority).
  ■ A gap priority value for each periodic MUSIM gap may be configured for the UE through the list.

- An indicator (musim-GapKeep) indicating whether keeping and using of all colliding MUSIM gaps is allowed

  ■ Through the indicator, the UE may be configured to keep and use a periodic MUSIM gap(s) and an aperiodic MUSIM gap satisfying at least one of the following conditions.
  ♦ Condition 1: Gap occasions overlap in the time domain (gap occasions are fully or partially overlapping in time domain)
  ♦ Condition 2: A distance between two gap occasions is equal to or smaller than 4 ms (distance between two gap occasions is equal to or smaller than 4ms)
  ● The distance between two gap occasions refers to a time difference between the last point of a first gap occasion and the first point of a second gap occasion, where the first gap occasion occurs earlier than the second gap occasion (the distance between two gap occasions is defined as the time difference between the ending point of the first occasion and the starting point of the second occasion, where the first gap occasion occurs earlier in time than the second gap occasion)

The UE 1k-02 having received the musim-GapConfig may perform the following operations.

- If the musim-GapConfig is configured as setup (if musim-GapConfig is set to setup)

  ■ For each musim-GapId included in the received musim-GapToReleaseList, the UE may release the periodic MUSIM gap configuration information associated with the musim-GapId (for each musim-GapId included in the received musim-GapToReleaseList, the UE shall release the periodic MUSIM gap configuration associated with the musim-GapId).
  ■ For each musim-Gap included in the received musim-GapToAddModList (for each MUSIM-Gap included in the received musim-GapToAddModList)
  ♦ The UE may set up a periodic MUSIM gap configuration indicated by the MUSIM-Gap according to the received musim-GapRepetitionAndOffset (the UE shall setup periodic MUSIM gap configuration indicated by the MUSIM-Gap in accordance with the received musim-GapRepetitionAndOffset). musim-GapRepetition and an Offset value are provided according to the following condition (providing musim-GapRepetition and Offset value for the following condition), and the first subframe of each periodic MUSIM gap occurs at a system frame number (SFN) and a subframe of an NR PCell meeting the following condition (the first subframe of each periodic MUSIM gap occurs at an SFN and subframe of the NR PCell meeting the following condition).

Condition:

$$\text{SFN mod } T = \text{FLOOR}(\text{Offset}/10);$$

subframe = Offset mod 10;
with

$$T = \text{musim-GapRepetition}/10;$$

♦ The UE may set up a MUSIM gap priority configuration indicated by configured musim-GapPriorityToAddModList for each periodic MUSIM gap (set the MUSIM gap priority configuration indicated by musim-GapPriority, if configured, for each periodic MUSIM gap).

■ If musim-AperiodicGap is included (if musim-AperiodicGap is included)

♦ The UE may set up an aperiodic MUSIM gap configuration indicated by the musim-AperiodicGap according to the received musim-Starting-SFN-AndSubframe (setup aperiodic MUSIM gap configuration indicated by the musim-AperiodicGap in accordance with the received musim-Starting-SFN-AndSubframe). The first subframe of an aperiodic MUSIM gap may occur at an SFN and a subframe of an NR PCell meeting the following condition (the first subframe of aperiodic MUSIM gap occurs at an SFN and subframe of the NR PCell meeting the following condition).

Condition:

$$SFN = starting\text{-}SFN;$$

Subframe = startingSubframe;

- The UE may configure musim-GapKeep if all collided MUSIM gaps are configured to be kept (set the musim-GapKeep, if all collided MUSIM gaps are configured to be kept). In other words, if the base station indicates musim-GapKeep (if musim-GapKeep is configured), the UE may keep all colliding MUSIM gaps (keep all collided MUSIM gaps) and use same (use keep solution), without determining which colliding MUSIM gap to use or not to use, based on priority.
- If musim-Gapconfig is configured as release (else if musim-Gapconfig is set to release)

■ The UE may release a MUSIM gap configuration (the UE shall release the MUSIM gap configuration).

In operation 1k-40, the USIM 1 UE 1k-02 may transmit a predetermined RRC message (e.g., RRCReconfigurationComplete) to base station 1 1k-04 in response to operation 1k-35.

In operation 1k-45, the USIM 1 UE 1k-02 may determine whether the MUSIM gaps set up in operation 1k-35 collide. That is, if MUSIM gap occasions overlap in the time domain or if the distance between MUSIM gap occasions is less than or equal to 4 ms, the UE 1k-02 may determine that the MUSIM gaps collide.

In operation 1k-50, the USIM 1 UE 1k-02 for which musim-GapKeep is configured may keep all MUSIM gaps colliding in operation 1k-45.

For reference, operations 1k-45 and 1k-50 may be performed before operation 1k-35.

In operation 1k-60, the USIM 1 UE 1k-02 may not perform transmission and reception operations with the base station 1 1k-04 during a MUSIM gap determined to be used. In other words, when there occurs a MUSIM gap determined not to be discarded and to be used in operation 1k-50, the UE may not perform transmission and reception operations with base station 1 1k-04 (e.g., NR serving cells) during the gap. In contrast, in operation 1k-55, the USIM 2 UE 1k-03 may perform a necessary operation during the MUSIM gap. That is, the USIM 2 UE 1k-03 may perform a necessary operation (e.g., a cell selection or cell reselection operation) with base station 2 1k-05.

The USIM 1 UE 1k-02 according to the disclosure may, in a case where musim-GapKeep is indicated, when periodic MUSIM gaps collide or an aperiodic MUSIM gap and a periodic MUSIM gap(s) collide, keep and use the MUSIM gaps. Therefore, the USIM 2 UE 1k-03 according to the disclosure may successfully perform a necessary operation during a MUSIM gap, unlike the above-described embodiment (the embodiment illustrated in FIG. 1J). For example, the USIM 2 UE 1k-03 may successfully acquire system information broadcast by base station 2 1k-05 without delay by using both an aperiodic MUSIM gap and a periodic MUSIM gap which collide.

The base station 1 1k-04 according to the disclosure may configure musim-GapKeep for the USIM 1 UE 1k-02 so as to keep and use all MUSIM gaps that may collide. That is, the base station may configure the UE to keep and use the MUSIM gaps regardless of whether a collision occurs between periodic MUSIM gaps or a collision occurs between an aperiodic MUSIM gap and periodic MUSIM gap.

FIG. 1L is a block diagram illustrating an internal structure of a UE according to an embodiment of the disclosure.

Referring to FIG. 1L, the UE includes a radio frequency (RF) processor 1l-10, a baseband processor 1l-20, a storage 1l-30, and a controller 1l-40.

The RF processor 1l-10 may perform functions for transmitting/receiving signals through a radio channel, such as signal band conversion and amplification. That is, the RF processor 1l-10 may up-convert a baseband signal provided from the baseband processor 1l-20 to an RF band signal, may transmit the same through an antenna, and may down-convert an

RF band signal received through the antenna to a baseband signal. For example, the RF processor 1l-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 1l-10 may include multiple RF chains. Furthermore, the RF processor 1l-10 may perform beamforming. For the beamforming, the RF processor 1l-10 may adjust the phase and magnitude of signals transmitted/received through multiple antennas or antenna elements, respectively. In addition, the RF processor may perform MIMO, and may receive multiple layers when performing an MIMO operation.

The baseband processor 1l-20 may perform functions of conversion between baseband signals and bitstrings according to the physical layer specifications of the system. For example, during data transmission, the baseband processor 1l-20 may encode and modulate a transmitted bitstring to generate complex symbols. In addition, during data reception, the baseband processor 1l-20 may demodulate and decode a baseband signal provided from the RF processor 1l-10 to restore a received bitstring. For example, when following the orthogonal frequency division multiplexing (OFDM) scheme, during data transmission, the baseband processor 1l-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1l-20 may split a baseband signal provided from the RF processor 1l-10 at the OFDM symbol level, may restore signals mapped to subcarriers through a fast Fourier transform (FFT) operation, and may restore a received bitstring through demodulation and decoding.

The baseband processor 1l-20 and the RF processor 1l-10 may transmit and receive signals as described above. Therefore, the baseband processor 1l-20 and the RF processor 1l-10 may be referred to as a transmitter, a receiver, a transceiver, or a communication unit. Furthermore, at least one of the baseband processor 1l-20 and the RF processor 1l-10 may include multiple communication modules to support multiple different radio access technologies. In addition, at least one of the baseband processor 1l-20 and the RF processor 1l-10 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 1l-30 may store basic programs, application programs, and data, such as configuration information, for operation of the main base station. Particularly, the storage 1l-30 may store information regarding a second access node configured to perform wireless communication by using a second radio access technology. In addition, the storage 1l-30 may provide the stored data at the request of the controller 1l-40.

The controller 1l-40 controls the overall operation of the UE. For example, the controller 1l-40 may transmit/receive signals through the baseband processor 1l-20 and the RF processor 1l-10. In addition, the controller1l-40 records data in the storage 1l-30 and reads the data from the storage 1l-30. To this end, the controller 1l-40 may include at least one processor. For example, the controller 1l-40 may include a communication processor (CP) configured to perform control for communication, and an application processor (AP) configured to control upper layers such as application programs.

FIG. 1M is a block diagram illustrating a structure of an NR base station according to an embodiment of the disclosure.

Referring to FIG. 1M, the base station includes an RF processor 1m-10, a baseband processor 1m-20, a backhaul communication unit 1m-30, a storage 1m-40, and a controller 1m-50.

The RF processor 1m-10 may perform functions for transmitting/receiving signals through a radio channel, such as signal band conversion and amplification. That is, the RF processor 1m-10 may up-convert a baseband signal provided from the baseband processor 1m-20 to an RF band signal, may transmit the same through an antenna, and may down-convert an RF band signal received through the antenna to a baseband signal. For example, the RF processor 1m-10 may include a transmission filter, a reception filter, an amplifier, a mixer, an oscillator, a DAC, and an ADC. Although only one antenna is illustrated in the drawing, the first access node may include multiple antennas. In addition, the RF processor 1m-10 may include multiple RF chains. Furthermore, the RF processor 1m-10 may perform beamforming. For the beamforming, the RF processor 1m-10 may adjust the phase and magnitude of signals transmitted/received through multiple antennas or antenna elements, respectively. The RF processor may transmit one or more layers to perform a downward MIMO operation.

The baseband processor 1m-20 may perform functions of conversion between baseband signals and bitstrings according to the physical layer specifications of a first radio access technology. For example, during data transmission, the baseband processor 1m-20 may encode and modulate a transmitted bitstring to generate complex symbols. In addition, during data reception, the baseband processor 1m-20 may demodulate and decode a baseband signal provided from the RF processor 1m-10 to restore a received bitstring. For example, when following the OFDM scheme, during data transmission, the baseband processor 1m-20 may encode and modulate a transmitted bitstring to generate complex symbols, may map the complex symbols to subcarriers, and may configure OFDM symbols through IFFT operation and CP insertion. In addition, during data reception, the baseband processor 1m-20 may split a baseband signal provided from the RF processor 1m-10 at the OFDM symbol level, may restore signals mapped to subcarriers through FFT operation, and

may restore a received bitstring through demodulation and decoding. The baseband processor 1m-20 and the RF processor 1m-10 may transmit and receive signals as described above. Therefore, the baseband processor 1m-20 and the RF processor 1m-10 may be referred to as a transmitter, a receiver, a transceiver, or a communication unit.

The backhaul communication unit 1m-30 provides an interface for communicating with other nodes in the network. That is, the backhaul communication unit 1m-30 converts bitstrings transmitted from the main base station to other nodes, for example, an auxiliary base station, a core network, etc., into physical signals, and converts physical signals received from the other nodes into bitstrings.

The storage unit 1i-40 may store basic programs, application programs, and data, such as configuration information, for operation of the base station. Particularly, the storage unit 1m-40 may store information regarding a bearer allocated to a connected UE, a measurement result reported from the connected UE, and the like. In addition, the storage 1m-40 may store information serving as a criterion to determine whether to provide multi-connectivity to a UE or to suspend same. In addition, the storage 1m-40 may provide the stored data at the request of the controller 1m-50.

The controller 1m-50 controls the overall operation of the base station. For example, the controller 1m-50 transmits/receives signals through the baseband processor 1m-20 and the RF processor 1m-10 or through the backhaul communication unit 1m-30. In addition, the controller 1m-50 records data in the storage 1m-40 and reads the data from the storage 1m-40. To this end, the controller 1m-50 may include at least one processor.

It should be noted that the configuration diagrams, illustrative diagrams of control/data signal transmission methods, illustrative diagrams of operation procedures, and structural diagrams as illustrated in FIG. 1A to FIG. 1M are not intended to limit the scope of protection of the disclosure. That is, all the constituent units, entities, or operation steps shown in FIG. 1A to FIG. 1M should not be construed as essential elements for implementing the disclosure, and even when including only some of the elements, the disclosure may be implemented without impairing the true nature of the disclosure.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units and modules of a network entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

**1.** A method performed by a terminal in a wireless communication system, the method comprising:

transmitting, to a base station, a first message including information associated with the terminal having capability to configure a multiple universal subscriber identity module (MUSIM) gap together with a concurrent measurement gap; and

based on the information, receiving, from the base station, a second message including at least one of configuration information of the MUSIM gap and configuration information of the concurrent measurement gap.

**2.** The method of claim 1, wherein a pre-configured measurement gap for positioning is not configured together with the MUSIM gap or the concurrent measurement gap.

**3.** The method of claim 1, wherein the information associated with the terminal having capability to configure the MUSIM gap together with the concurrent measurement gap is associated with information indicating whether the terminal is able to provide MUSIM assistance information regarding a priority preference for a periodic MUSIM gap, is able to support a periodic MUSIM gap priority configuration related thereto, and supports a preference for keeping collided MUSIM gaps, and

wherein the information associated with the terminal having capability to configure the MUSIM gap together with the concurrent measurement gap is indicated by musim-GapPriorityPreference information.

**4.** The method of claim 1, further comprising:

in case that the configuration information of the MUSIM gap comprises information for adding at least one periodic MUSIM gap, setting up at least one periodic MUSIM gap configuration;
in case that the configuration information of the MUSIM gap comprises information for adding an aperiodic MUSIM gap, setting up an aperiodic MUSIM gap configuration; and
in case that information indicating that the terminal is allowed to keep all colliding MUSIM periodic and aperiodic gaps is configured according to the configuration information of the MUSIM gap, keeping all colliding MUSIM gaps,
wherein the information associated with the terminal having capability to configure the MUSIM gap together with the concurrent measurement gap further indicates that the terminal prefers to keep all collided MUSIM gaps.

**5.** A method performed by a base station in a wireless communication system, the method comprising:

receiving, from a terminal, a first message including information associated with the terminal having capability to configure a multiple universal subscriber identity module (MUSIM) gap together with a concurrent measurement gap; and
based on the information, transmitting, to the terminal, a second message including at least one of configuration information of the MUSIM gap and configuration information of the concurrent measurement gap.

**6.** The method of claim 5, wherein a pre-configured measurement gap for positioning is not configured together with the MUSIM gap or the concurrent measurement gap.

**7.** The method of claim 5, wherein the information associated with the terminal having capability to configure the MUSIM gap together with the concurrent measurement gap is associated with information indicating whether the terminal is able to provide MUSIM assistance information regarding a priority preference for a periodic MUSIM gap, is able to support a periodic MUSIM gap priority configuration related thereto, and supports a preference for keeping collided MUSIM gaps, and
wherein the information associated with the terminal having capability to configure the MUSIM gap together with the concurrent measurement gap is indicated by musim-GapPriorityPreference information.

**8.** The method of claim 5, wherein the configuration information of the MUSIM gap comprises information for adding at least one periodic MUSIM gap, information for adding an aperiodic MUSIM gap, and information indicating that the terminal is allowed to keep all colliding MUSIM periodic and aperiodic gaps,

wherein, according to the configuration information of the MUSIM gap, at least one periodic MUSIM gap configuration is set up, an aperiodic MUSIM gap configuration is set up, and all colliding MUSIM gaps are kept, and
wherein the information associated with the terminal having capability to configure the MUSIM gap together with the concurrent measurement gap further indicates that the terminal prefers to keep all collided MUSIM gaps.

**9.** A terminal in a wireless communication system, the terminal comprising:

a transceiver; and
a controller connected to the transceiver,
wherein the controller is configured to:

transmit, to a base station, a first message including information associated with the terminal having capability to configure a multiple universal subscriber identity module (MUSIM) gap together with a concurrent measurement gap; and
based on the information, receive, from the base station, a second message including at least one of configuration information of the MUSIM gap and configuration information of the concurrent measurement gap.

**10.** The terminal of claim 9, wherein a pre-configured measurement gap for positioning is not configured together with the MUSIM gap or the concurrent measurement gap.

**11.** The terminal of claim 9, wherein the information associated with the terminal having capability to configure the MUSIM

gap together with the concurrent measurement gap is associated with information indicating whether the terminal is able to provide MUSIM assistance information regarding a priority preference for a periodic MUSIM gap, is able to support a periodic MUSIM gap priority configuration related thereto, and supports a preference for keeping collided MUSIM gaps, and

wherein the information associated with the terminal having capability to configure the MUSIM gap together with the concurrent measurement gap is indicated by musim-GapPriorityPreference information.

**12.** The terminal of claim 9, wherein the controller is configured to:

in case that the configuration information of the MUSIM gap comprises information for adding at least one periodic MUSIM gap, set up at least one periodic MUSIM gap configuration;

in case that the configuration information of the MUSIM gap comprises information for adding an aperiodic MUSIM gap, set up an aperiodic MUSIM gap configuration; and

in case that information indicating that the terminal is allowed to keep all colliding MUSIM periodic and aperiodic gaps is configured according to the configuration information of the MUSIM gap, keep all colliding MUSIM gaps, and

wherein the information associated with the terminal having capability to configure the MUSIM gap together with the concurrent measurement gap further indicates that the terminal prefers to keep all colliding MUSIM gaps.

**13.** A base station in a wireless communication system, the base station comprising:

a transceiver; and

a controller connected to the transceiver,

wherein the controller is configured to:

receive, from a terminal, a first message including information associated with the terminal having capability to configure a multiple universal subscriber identity module (MUSIM) gap together with a concurrent measurement gap; and

based on the information, transmit, to the terminal, a second message including at least one of configuration information of the MUSIM gap and configuration information of the concurrent measurement gap.

**14.** The base station of claim 13, wherein a pre-configured measurement gap for positioning is not configured together with the MUSIM gap or the concurrent measurement gap,

wherein the information associated with the terminal having capability to configure the MUSIM gap together with the concurrent measurement gap is associated with information indicating whether the terminal is able to provide MUSIM assistance information regarding a priority preference for a periodic MUSIM gap, is able to support a periodic MUSIM gap priority configuration related thereto, and supports a preference for keeping collided MUSIM gaps, and

wherein the information associated with the terminal having capability to configure the MUSIM gap together with the concurrent measurement gap is indicated by musim-GapPriorityPreference information.

**15.** The base station of claim 13, wherein the configuration information of the MUSIM gap comprises information for adding at least one periodic MUSIM gap, information for adding an aperiodic MUSIM gap, and information indicating that the terminal is allowed to keep all colliding MUSIM periodic and aperiodic gaps,

wherein, according to the configuration information of the MUSIM gap, at least one periodic MUSIM gap configuration is set up, an aperiodic MUSIM gap configuration is set up, and all colliding MUSIM gaps are kept, and

wherein the information associated with the terminal having capability to configure the MUSIM gap together with the concurrent measurement gap further indicates that the terminal prefers to keep all colliding MUSIM gaps.

FIG. 1A

1a-25
1a-30
MME
S-GW
1a-05
1a-10
1a-15
1a-20
ENB
ENB
ENB
ENB
1a-35
UE

FIG. 1B

UE
LTE eNB
1b-05
PDCP
1b-10
RLC
1b-15
MAC
1b-20
PHY
1b-40
PDCP
1b-35
RLC
1b-30
MAC
1b-25
PHY

1c-25
MME
1c-30
eNB
1c-05
NR CN
1c-10
NR gNB
1c-20
Radio access
1c-15
NR UE

FIG. 1C

FIG. 1D

UE
NR gNB
NR SDAP
1d-01
NR PDCP
1d-05
NR RLC
1d-10
NR MAC
1d-15
NR PHY
1d-20
NR SDAP
1d-45
NR PDCP
1d-40
NR RLC
1d-35
NR MAC
1d-30
NR PHY
1d-25

FIG. 1E

1e-05
UE
1e-10
Base station
1e-15
RRC connected mode
UE capability information
(independentGapConfig, musim-GapPreference,
concurrentMeasGap, mg-ActivationCommPRS-Meas,
mg-ActivationRequestPRS-Meas)
1e-20
Gap configuration for one single gap feature
1e-25

FIG. 1F

1f-05
1f-10
UE
Base station
1f-15
RRC connected mode
UE capability information
(jointConcurrentMG-MUSIM-Gap,
musim-GapPriorityPreference)
1f-20
Joint configuration of MUSIM gap
and concurrent measurement gap
1f-25

FIG. 1G

1g-05
1g-10
UE
Base station
1g-15
RRC connected mode
UE capability information
(jointMUSIM-ConcurrentMG-OrMUSIM-PrePosMG)
1g-20
Joint configuration of MUSIM gap and
concurrent measurement gap or
joint configuration of MUSIM gap and
pre-configured measurement gap for positioning
1g-25

FIG. 1H

1h-05
1h-10
UE
Base station
1h-15
RRC connected mode
UE capability information
(jointMUSIM-ConcurrentMG-PrePosMG)
1h-20
Joint configuration of MUSIM gap, concurrent
measurement gap, and pre-configured
measurement gap for positioning
1h-25

FIG. 1I

1i-05
1i-10
UE
Base station
1i-15
RRC connected mode
UE capability information
(musim-GapPriorityPreference)
1i-20
Joint configuration of MUSIM gap,
concurrent measurement gap, and/or
pre-configured measurement gap for positioning
1i-25

FIG. 1J

Multi-USIM-capable UE
1j-01
USIM 2 UE
1j-03
USIM 1 UE
1j-02
Network 1
1j-04
Network 2
1j-05
RRC connection
1j-13
RRC idle or RRC inactive
1j-10
UE capability information
(musim-GapPreference, musim-GapPriorityPreference)
1j-15
otherConfig
(musim-GapAssistanceConfig,
musim-GapPriorityAssistanceConfig)
1j-20
1j-25
Notify of information
for operations
required in USIM 2 UE
UE capability information
(musim-GapPreferenceList, musim-
GapPriorityPreferenceList, musim-GapKeepPreference)
1j-30
RRC reconfiguration (musim-GapConfig)
1j-35
RRC reconfiguration completion
1j-40
Determine whether MUSIM gaps collide
1j-45
Keep all or some of MUSIM gaps and, if necessary, discard MUSIM
gaps not to be kept (i.e., discard periodic MUSIM gap(s) if collision
occurs with aperiodic MUSIM gap)
1j-50
1j-55
Perform necessary
operation during MUSIM gap
Not perform transmission
/reception with network
1 during MUSIM gap
1j-60

FIG. 1K
Multi-USIM-capable UE
1k-01
USIM 2 UE
1k-03
USIM 1 UE
1k-02
Network 1
1k-04
Network 2
1k-05
RRC connection
1k-13
RRC idle or RRC inactive
1k-10
UE capability information
(musim-GapPreference, musim-GapPriorityPreference)
1k-15
1k-25
Notify of information
for operations
required in USIM 2 UE
otherConfig
(musim-GapAssistanceConfig,
musim-GapPriorityAssistanceConfig)
1k-20
UE capability information
(musim-GapPreferenceList, musim-
GapPriorityPreferenceList, musim-GapKeepPreference)
1k-30
RRC reconfiguration
(musim-GapConfig)
1k-35
RRC reconfiguration completion
1k-40
Determine whether MUSIM gaps collide
1k-45
Keep all colliding MUSIM gaps
1k-50
1k-55
Perform necessary
operation during MUSIM gap
Not perform transmission
/reception with network 1
during MUSIM gap
1k-60

FIG. 1L

1l-40
Controller
Multi-connectivity processor
1l-42
1l-20
Baseband processor
1l-10
RF processor
1l-30
Storage

FIG. 1M

1m-30
Backhaul communication unit

1m-50
Controller

1m-52
Multi-connectivity processor

1m-40
Storage

1m-20
Baseband processor

1m-10
RF processor

## INTERNATIONAL SEARCH REPORT

International application No.
**PCT/KR2025/000914**

**A. CLASSIFICATION OF SUBJECT MATTER**

**H04W 8/24**(2009.01)i; **H04W 8/18**(2009.01)i; **H04W 24/08**(2009.01)i; **H04W 76/22**(2018.01)i; **H04W 88/06**(2009.01)i

According to International Patent Classification (IPC) or to both national classification and IPC

**B. FIELDS SEARCHED**

Minimum documentation searched (classification system followed by classification symbols)

H04W 8/24(2009.01); H04W 72/29(2023.01); H04W 88/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MUSIM, 측정(measurement), 갭(gap), 설정(configuration), 충돌(collision)

**C. DOCUMENTS CONSIDERED TO BE RELEVANT**

| Category* | Citation of document, with indication, where appropriate, of the relevant passages | Relevant to claim No. |
|---|---|---|
| Y<br>A | CMCC. Discussion on collisions between gaps and priority rules for MUSIM gaps. R4-2319101, 3GPP TSG RAN WG4 Meeting #109. 03 November 2023.<br>See section 2. | 1-2,5-6,9-10,13<br>3-4,7-8,11-12,14-15 |
| Y | VIVO. draft CR on genearl aspects for MUSIM gaps and collision handling. R4-2319244, 3GPP TSG RAN WG4 Meeting #109. 03 November 2023.<br>See sections 9.1.5.1 and 9.1.10.3. | 1-2,5-6,9-10,13 |
| Y | MEDIATEK INC. Report of [AT119-e][015][NR17] Gap Coordination (MediaTek). R2-2209029, 3GPP TSG RAN WG2 Meeting #109-e. 03 September 2022.<br>See section 3. | 2,6,10 |
| A | VIVO. Discussion on MUSIM gap priorities. R2-2311848, 3GPP TSG RAN WG2 Meeting #124. 03 November 2023.<br>See section 2.1. | 1-15 |
| A | WO 2023-133145 A1 (OFINNO LLC et al.) 13 July 2023 (2023-07-13)<br>See paragraphs [0400]-[0434]; and claims 1-50. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **23 April 2025** | **24 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2025/000914**

| Patent document cited in search report | Publication date (day/month/year) | Patent family member(s) | Publication date (day/month/year) |
|---|---|---|---|
| WO 2023-133145 A1 | 13 July 2023 | EP 4449808 A1 | 23 October 2024 |
| | | US 2024-0340928 A1 | 10 October 2024 |

Form PCT/ISA/210 (patent family annex) (July 2022)